(19) Europäisches Patentamt
European Patent Office
Office européen des brevets

(11) **EP 2 045 180 A1**

(12) **EUROPEAN PATENT APPLICATION**
published in accordance with Art. 153(4) EPC

(43) Date of publication:
08.04.2009 Bulletin 2009/15

(51) Int Cl.:
*B62K 17/00* (2006.01)   *B62K 3/00* (2006.01)

(21) Application number: 07791221.0

(86) International application number:
PCT/JP2007/064489

(22) Date of filing: 24.07.2007

(87) International publication number:
WO 2008/013165 (31.01.2008 Gazette 2008/05)

(84) Designated Contracting States:
AT BE BG CH CY CZ DE DK EE ES FI FR GB GR
HU IE IS IT LI LT LU LV MC MT NL PL PT RO SE
SI SK TR
Designated Extension States:
AL BA HR MK RS

(30) Priority: 24.07.2006 JP 2006201159

(71) Applicant: Equos Research Co., Ltd.
Chiyoda-ku
Tokyo 1010021 (JP)

(72) Inventors:
• DOI, Katsunori
  Tokyo 1010021 (JP)
• SAWADA, Kazuaki
  Tokyo 1010021 (JP)
• MIKI, Nobuaki
  Tokyo 1010021 (JP)

(74) Representative: TBK-Patent
Bavariaring 4-6
80336 München (DE)

(54) **VEHICLE**

(57) A transverse two-wheeled vehicle capable of increasing a turning limit value is provided.

As measures for a turn of the transverse two-wheeled vehicle, a turning limit estimation system which obtains the turning limit value and a center-of-gravity position adjustment system which improves the turning limit value are provided. The turning limit estimation system obtains the turning limit value and a turning stability by estimating a center-of-gravity position and a lateral acceleration with high precision. In the center-of-gravity position adjustment system, the turning limit value is increased by causing the estimated center-of-gravity position to move toward a centripetal direction. As mechanisms for causing the center of gravity to move, one or more of i) a vehicle body tilt mechanism, ii) weight movement mechanism, and iii) a seat parallel movement mechanism are used. Accordingly, the transverse two-wheeled vehicle, particularly a vehicle with a narrow interval between two wheels and a high center of gravity, can make a faster and smaller turn, and a driving performance, stability, and security of a turning operation are improved.

F I G . 16

| $\Delta\beta^*_{SL}\cdot\Delta\beta^*_{CL}>0$ COOPERATIVE OPERATION | $\Delta\beta^*_{SL}\cdot\Delta\beta^*_{CL}<0$ OFFSET OPERATION | |
| --- | --- | --- |
| | $\Delta\beta^*_{LOW}\cdot\Delta\beta^*_{CL}\geqq0$ SEAT MOVEMENT OPPOSITE OPERATION | $\Delta\beta^*_{LOW}\cdot\Delta\beta^*_{CL}<0$ VEHICLE BODY TILT OPPOSITE OPERATION |

**Description**

TECHNICAL FIELD

The present invention relates to a vehicle, and relates specifically to an attitude control at the time of a turn of a transverse two-wheeled vehicle having two drive wheels arranged to oppose each other, for example.

BACKGROUND ART

Vehicles utilizing an attitude control of an inverted pendulum (hereinafter simply referred to as "inverted pendulum vehicle") have been attracting attention, and are currently on the way to being put to practical use.
For example, Patent Document 1 discloses technology of driving on two drive wheels which are coaxially arranged while detecting an attitude of the drive wheel caused by a center-of-gravity movement of a driver.
Patent Document 2 discloses a vehicle which moves while controlling the attitude of one conventional circular-shaped drive wheel or one sphere-shaped drive wheel. Patent Document 2 also mentions various inverted pendulum vehicles.
[Patent Document 1]
Japanese Patent Application Publication No. JP-A-2004-276727
[Patent Document 2]
Japanese Patent Application Publication No. JP-A-2004-129435

Such vehicles maintain a stopped state or are driven while performing the attitude control based on a weight shift amount of the driver, an operated amount from a remote control or an operating device, driving instruction data input in advance, or the like.
By steering the wheel or providing a differential torque to the two drive wheels, the vehicle makes a turn.

DISCLOSURE OF THE INVENTION

[Problem to be Solved by the Invention]

However, compared to a general passenger car, such a one-man vehicle is small in size and narrow in interval between the left and right wheels. The proportion of the weight of an occupant is large with respect to the weight of the entire vehicle, and a center-of-gravity position of the entire vehicle rises when the occupant ensures a seated attitude.
Thus, if a turning speed is too high or a turning radius is too small when the vehicle makes a turn, the vehicle may be tilted excessively due to centrifugal force. Since a vertical load on the inner wheel side decreases, it may cause a slip of the inner wheel if not an overturn.
Since there is a limit in a turning performance in this manner, a restriction value in accordance with a limit value thereof is set to make the turn within that range.
However, when the occupant changes a seated position or the seated attitude or someone else with a different body type rides the vehicle, the limit values of the turning speed and a turning curvature (inverse of the turning radius) also change. Therefore, considering security, it has been necessary to set the restriction value corresponding to the severest condition within a range of expected condition changes, and thus it has not been possible to set a high restriction value suitable for the respective conditions.
Note that a similar problem occurs even in the case where there is absolutely no loading object or in the case of automatic driving with an arbitrary material object thereon.
Thus, an object of the present invention is to provide a transverse two-wheeled vehicle capable of increasing a turning limit value (maximum values of turning speed and turning curvature) and a restriction value thereof.

[Means for Solving the Problem]

(1) According to the invention described in claim 1, the above-described object is achieved by providing a vehicle including two drive wheels arranged to oppose each other. The vehicle includes: a riding portion for accommodating a weight body; center-of-gravity position acquisition means for acquiring a center-of-gravity position; lateral acceleration acquisition means for acquiring a lateral acceleration which is an acceleration component in a horizontal direction with respect to an axle; movement amount determination means for determining a movement amount of the center-of gravity position in a left-right direction in accordance with a magnitude of the acquired center-of-gravity position and lateral acceleration; and center-of-gravity movement means for causing the center-of-gravity position to move in accordance with the determined movement amount of the center-of-gravity position.

(2) The invention described in claim 2 provides the vehicle described in claim 1, which is characterized by further including rotation speed acquisition means for acquiring a rotation speed of each of the two drive wheels, and which is characterized in that the lateral acceleration acquisition means calculates the lateral acceleration using each of the acquired rotation speeds of the two drive wheels.

(3) The invention described in claim 3 provides the vehicle described in claim 1, which is characterized by further including an accelerometer arranged in the vehicle, and which is characterized in that the lateral acceleration acquisition means calculates the lateral acceleration using a measured value of the accelerometer.

(4) The invention described in claim 4 provides the vehicle described in any one of claims 1 to 3, which is characterized by further including: a load sensor arranged in the riding portion; and a height sensor which measures a height of the weight body, and which is characterized in that the center-of-gravity position acquisition means acquires the center-of-gravity position from detected values of the load sensor and the height sensor.

(5) The invention described in claim 5 provides the vehicle described in any one of claims 1 to 3, which is characterized in that the center-of-gravity position acquisition means acquires the center-of-gravity position using a disturbance observer.

(6) The invention described in claim 6 provides the vehicle according to any one of claims 1 to 3, which is characterized by further including: a load sensor arranged in the riding portion; a height sensor which measures a height of the weight body; direct acquisition means for acquiring the center-of-gravity position from detected values of the load sensor and the height sensor; and indirect acquisition means for acquiring the center-of-gravity position using a disturbance observer, and which is characterized in that the center-of-gravity position acquisition means acquires the center-of-gravity position based on acquired values of the direct acquisition means and the indirect acquisition means.

(7) The invention described in claim 7 provides the vehicle described in any one of claims 1 to 6, which is characterized in that the center-of-gravity movement means includes at least one of vehicle body tilting means for tilting a vehicle body in the left-right direction; weight moving means for moving a weight in the left-right direction; and riding portion moving means for moving the riding portion in the left-right direction.

(8) The invention described in claim 8 provides the vehicle described in claim 7, which is characterized in that the center-of-gravity movement means includes two or more of the vehicle body tilting means, the weight moving means, and the riding portion moving means, and the movement amount determination means includes distribution means for distributing the determined movement amount of the center of gravity to two or more of the vehicle body tilting means, the weight moving means, and the riding portion moving means included in the center-of-gravity movement means.

(9) The invention described in claim 9 provides the vehicle described in claim 8, which is characterized in that the distribution means distributes the determined movement amount of the center of gravity based on a frequency component.

[Effects of the Invention]

The present invention has a configuration in which the center-of-gravity position and the lateral acceleration are acquired, and in accordance with values thereof, the movement amount of the center-of-gravity position in the left-right direction is determined. Then, the center-of-gravity position is caused to move in accordance with the determined movement amount of the center-of-gravity position. Thus, the turning limit value and the restriction value can be increased.

BRIEF DESCRIPTION OF THE DRAWINGS

[FIG. 1] FIG. 1 is a schematic configuration diagram of a vehicle according to the present embodiment.
[FIG. 2] FIG. 2 is a configuration diagram of a control unit.
[FIG. 3] FIG. 3 shows illustrative views of arrangements of a load meter and a seating height meter.
[FIG. 4] FIG. 4 is a flowchart showing the content of a turning limit improvement control process.
[FIG. 5] FIG. 5 shows views illustrating dynamic states of the vehicle when making a turn while driving with a vehicle body being tilted.
[FIG. 6] FIG. 6 is a view illustrating a state of an occupant (loading object) at the time of the turn.
[FIG. 7] FIG. 7 is an illustrative view of a type determination of the loading object and an estimation of a center-of-gravity height based thereon.

[FIG. 8] FIG. 8 is a view illustrating a method for estimating a disturbance using a disturbance observer.

[FIG. 9] FIG. 9 is a view illustrating a dynamic model of a center-of-gravity position adjustment mechanism.

[FIG. 10] FIG. 10 shows views illustrating a distinctive use of a direct estimate value and an indirect estimate value regarding dynamic parameters of the loading object.

[FIG. 11] FIG. 11 shows views illustrating the center-of-gravity positions in a basic state and an adjusted state.

[FIG. 12] FIG. 12 is an illustrative view of a basic vertical load center point S and a basic vertical load eccentricity $\beta$.

[FIG. 13] FIG. 13 shows views illustrating a basic vertical load eccentricity target value $\beta^*$ and a basic vertical load eccentricity modification amount $\Delta\beta^*$.

[FIG. 14] FIG. 14 is a view illustrating a distinctive use (gain diagram of a filter) according to a frequency of respective center-of-gravity position adjustment mechanisms.

[FIG. 15] FIG. 15 shows illustrative views of a vehicle body tilt angle target value decision function.

[FIG. 16] FIG. 16 is an illustrative view of a cooperative operation and an offset operation by a low frequency center-of-gravity position adjustment mechanism.

[FIG. 17] FIG. 17 shows views illustrating configuration examples of a vehicle body tilt mechanism which is one of the center-of-gravity position adjustment mechanisms.

[FIG. 18] FIG. 18 shows views illustrating configuration examples of a weight movement mechanism which is one of the center-of-gravity position adjustment mechanisms.

[FIG. 19] FIG. 19 shows views illustrating configuration examples of a riding portion movement mechanism which is one of the center-of-gravity position adjustment mechanisms.

[Description of the Reference Numerals]

| 11 | DRIVE WHEEL |
| 12 | DRIVE MOTOR |
| 13 | RIDING PORTION |
| 131 | SEAT PORTION |
| 14 | SUPPORTING MEMBER |
| 16 | CONTROL UNIT |
| 20 | CONTROL ECU |
| 21 | VEHICLE BODY DRIVING CONTROL SYSTEM |
| 22 | LATERAL ACCELERATION DETERMINATION SYSTEM |
| 23 | CENTER-OF-GRAVITY POSITION CONTROL SYSTEM |
| 24 | DISTURBANCE OBSERVER |
| 25 | CENTER-OF-GRAVITY POSITION ESTIMATION SYSTEM |
| 30 | OPERATING DEVICE |
| 40 | DRIVING/ATTITUDE CONTROL SENSOR |
| 41 | DRIVING SPEED METER |
| 42 | ACCELEROMETER |
| 43 | VEHICLE BODY TILT ANGLE METER |
| 50 | CENTER-OF-GRAVITY POSITION MEASUREMENT SENSOR |
| 51 | LOAD METER |
| 52 | SEATING HEIGHT METER |
| 60 | ACTUATOR |
| 61 | DRIVE WHEEL ACTUATOR |
| 62 | VEHICLE BODY TILT ACTUATOR |
| 63 | WEIGHT DRIVE ACTUATOR |
| 64 | RIDING PORTION DRIVE ACTUATOR |
| 134 | WEIGHT |

BEST MODES FOR CARRYING OUT THE INVENTION

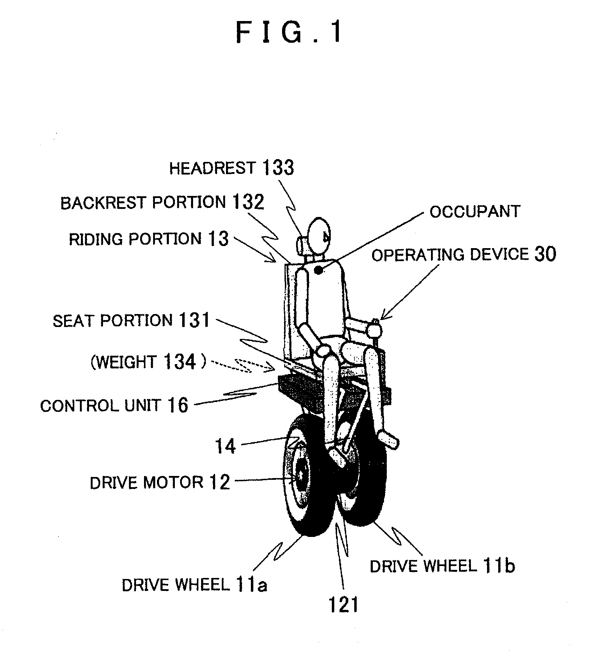

Hereinafter, a preferred embodiment of a vehicle of the present invention will be described in detail with reference to FIGS. 1 to 19.

(1) Outline of Present Embodiment

When a vertical load center point of the vehicle comes outside a range between two drive wheels while making a turn, the vehicle overturns.

Herein, the vertical load center point is an intersection point of a ground and a line parallel to a resultant vector F of centrifugal force and gravitational force applied to the vehicle and passing through a center of gravity. At this time, the direction of the resultant vector F is determined by a lateral acceleration of the vehicle, and further, the lateral acceleration is determined by a turning speed and a turning curvature of the vehicle.

Thus, the position of the vertical load center point, i.e., whether the vehicle overturns, is determined by the center-of-gravity position and the lateral acceleration (the turning speed and the turning curvature) of the vehicle.

By causing the center-of-gravity position of the vehicle to move in a centripetal direction (direction toward a center of a clearance circle), a turning limit value of the vehicle is improved.

The present embodiment includes, as means to improve a turning limit of the transverse two-wheeled vehicle, (a) a turning limit estimation system which obtains the turning limit value and (b) a center-of-gravity position adjustment system which improves the turning limit value.

(a) The turning limit estimation system obtains the turning limit value by estimating the center-of-gravity position of the vehicle with high precision. Also, by estimating or measuring the lateral acceleration of the vehicle, a current driving state is obtained.

Regarding the estimation of the center-of-gravity position, a seated position, weight, or body type of a loading object (occupant, material object, or the like) are measured using measured values of a load meter and a seating height meter, and the center-of-gravity position of the vehicle (displacement from a vehicle body symmetry plane and height) is estimated (as direct estimation) from the measured values. Also, the center-of-gravity position is estimated (as indirect estimation) using a disturbance observer from a control history of a lateral vehicle body tilt control.

The lateral acceleration (magnitude of centrifugal force) is determined by a rotation meter and an acceleration sensor of each wheel.

(b) In the center-of-gravity position adjustment system, the turning limit value is increased by causing the estimated center-of-gravity position to move in the centripetal direction (direction toward the center of the clearance circle).

That is, the center of gravity is caused to move to a position where a vertical load center point S is inside the range between the two drive wheels and a stable turn is possible.

As a mechanism which moves the center of gravity, one or more of i) a vehicle body tilt mechanism, ii) a weight movement mechanism, and iii) a seat parallel movement mechanism are used.

In the case where a plurality of the center-of-gravity movement mechanisms are used, the respective mechanisms are used distinctively according to frequency characteristics and/or a center-of-gravity movement amount is distributed to the respective mechanisms according to frequency components.

Accordingly, in the present embodiment, a faster and smaller turn is made possible with the transverse two-wheeled vehicle, thereby to improve driving performance, stability, and security of a turning operation.

Note that, in this specification, some notations differ from those in the drawings for the sake of convenience. For example, of symbols within a parenthesis after a character such as in d($\rightarrow$A) and $\theta^{(\cdot\cdot)}$, "$\rightarrow$" indicates a vector amount (matrix), "A" indicates an estimate value, and "$\cdot$" and "$\cdot\cdot$" indicate first order and second order time derivatives of a character preceding the parenthesis.

(2) Details of Present Embodiment

FIG. 1 is a schematic configuration diagram of the vehicle according to the present embodiment.

As shown in FIG. 1, the vehicle includes two drive wheels 11 a and 11b arranged coaxially.

The two drive wheels 11a and 11b are each driven by a drive motor 12.

On the upper portion of the drive wheels 11a and 11b (hereinafter collectively called "drive wheel 11" in the case of referring to both drive wheels 11a and 11b) and the drive motor 12, a riding portion 13 (seat) is arranged to accommodate a material object, an occupant, or the like as a weight body.

The riding portion 13 is configured of a seat portion 131 where the driver is to be seated, a backrest portion 132, and a headrest 133.

The riding portion 13 is supported by a supporting member 14 fixed to a drive motor case 121 storing the drive motor 12.

An operating device 30 is arranged on the left side of the riding portion 13. The operating device 30 is for instructing acceleration, deceleration, turn, pivot (pivot turn), stop, braking, or the like of the vehicle by an operation of the driver.

The operating device 30 in the present embodiment is fixed to the seat portion 131, but may be configured by a remote control with a wired or wireless connection. The operating device 30 may be arranged on an upper portion of an armrest.

The vehicle in the present embodiment is arranged with the operating device 30. However, in the case of a vehicle which is automatically driven in accordance with driving instruction data determined in advance, a driving instruction data acquisition portion is arranged instead of the operating device 30. The driving instruction data acquisition portion may be configured of, for example, reading means which reads the driving instruction data from various storage media such as a semiconductor memory, and/or communication control means for acquiring the driving instruction data externally by wireless communication.

Note that, although FIG. 1 shows a case where a human is on the riding portion 13, the vehicle is not necessarily limited to that driven by a human, and may be driven or stopped by an external remote control operation or the like with only a material object thereon, driven or stopped in accordance with the driving instruction data with only a material object thereon, or driven or stopped in a state with nothing being accommodated.

In the present embodiment, control of acceleration/deceleration and the like is performed by an operation signal output by the operation of the operating device 30. However, for example, the driver may change a forward tilt moment or a tilt angle to the front or back with respect to the vehicle to perform an attitude control and a driving control of the vehicle in accordance with the tilt angle, as shown in Patent Document 1. Alternatively, the two procedures may be switchable.

On the lower side (undersurface side of the seat portion 131) of the riding portion 13, a load meter 51 which is not shown but described later is arranged.

On the back surface (front side of the backrest portion) of the riding portion, a seating height meter 52 which is not shown but described later is arranged.

Between the riding portion 13 and the drive wheel 11, a weight 134 which is not shown but described later is arranged. The weight 134 is configured to be movable in a left-right direction (direction parallel to an axle) by a weight drive actuator 63 described later.

A control unit 16 is arranged between the riding portion 13 and the drive wheels 11. The control unit 16 in the present embodiment is attached to the lower surface of the seat portion 131 of the riding portion 13, but may be attached to the supporting member 14.

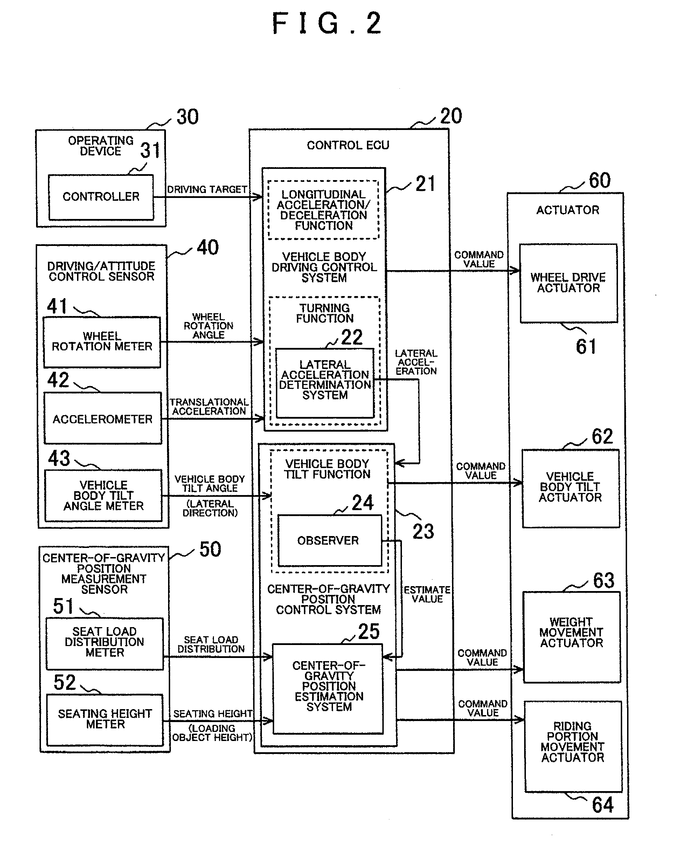

FIG. 2 shows the configuration of the control unit 16.

The control unit 16 includes a control electronic control device (ECU) 20 which performs various controls such as the driving/attitude control of the vehicle and a driving control at the time of a turn according to the present embodiment.

The control ECU 20 is electrically connected with other devices such as the operating device 30, a driving/attitude control sensor 40, a center-of-gravity position measurement sensor 50, an actuator 60, and a battery.

The battery supplies electric power to the drive motor 12, the actuator 60, the control ECU 20, and the like.

The control ECU 20 is configured of a computer system including a ROM storing data and various programs such as a driving control program, an attitude control program, and a turn control process program according to the present embodiment, a RAM used as a work area, an external storage device, an interface portion, and the like.

The control ECU 20 includes a vehicle body driving control system 21 and a center-of-gravity position control system 23.

The vehicle body driving control system 21 is configured to provide a longitudinal acceleration/deceleration function of controlling the acceleration/deceleration of the vehicle in the front-back direction, and a turning function of turning the vehicle, and includes a lateral acceleration determination system 22 in order to achieve the turning function.

The vehicle body driving control system 21 performs the attitude control, and supplies a command value supplied from the operating device 30 and corresponding to the instruction regarding the front-back direction and the turn to the wheel drive actuator 61.

The lateral acceleration determination system 22 calculates a lateral acceleration a from wheel rotation angles of the two drive wheels 1la and 11b supplied from the driving/attitude control sensor 40 and/or a translational acceleration, and supplies the lateral acceleration a to the center-of-gravity position control system 23.

The center-of-gravity position control system 23 includes a disturbance observer 24 and a center-of-gravity position estimation system 25.

The disturbance observer 24 estimates (as the indirect estimation) the center-of-gravity position of the loading object (occupant or the like) by estimating a disturbance from the supplied lateral acceleration a and a measured value of a vehicle body tilt angle $\theta_1$, and supplies the estimate value to the center-of-gravity position estimation system 25.

The center-of-gravity position estimation system 25 determines the type (human, material object, or none) of the loading object from the supplied lateral acceleration and measured values of load distribution and seating height, and estimates (as the direct estimation) a center-of-gravity displacement and height of the loading object according to the type.

Also, the center-of-gravity position estimation system 25 determines the center-of-gravity position of the vehicle from the center-of-gravity displacement and height of the direct estimation and the indirect estimation.

The center-of-gravity position control system 23 determines target values of the vehicle body tilt angle, a weight position, and a riding portion position in accordance with the estimated center-of-gravity position and the magnitude of the lateral acceleration a, and supplies a corresponding command value to the actuator 60 such that actual information of the vehicle coincides with the target values.

The operating device 30 includes a controller 31, and the target value in the vehicle driving is supplied to the control ECU 20 based on the operation of the driver.

The driving/attitude control sensor 40 includes a wheel rotation meter 41 which detects a wheel rotation angle, an accelerometer 42 which detects the translational acceleration of the vehicle, and a vehicle body tilt angle meter 43 which detects the vehicle body tilt angle (roll angle) in the lateral direction.

The detected value of the driving/attitude control sensor 40 is supplied to the vehicle body drive control system 21 and the lateral acceleration determination system 22.

The center-of-gravity position measurement sensor 50 includes the load meter (or a load distribution meter) and the seating height meter (or a shape measuring instrument) used for estimating (as the direct estimation) the center-of-gravity position of the occupant (loading object).

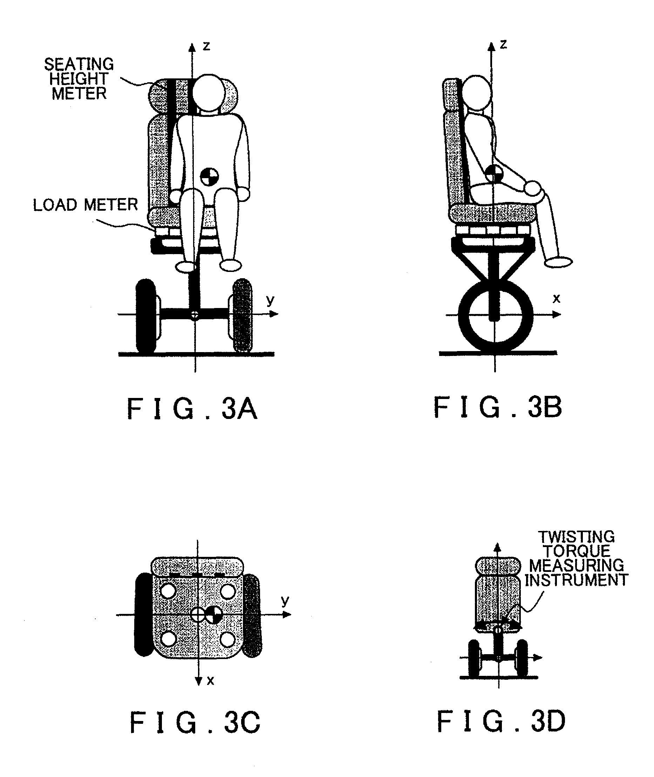

FIG. 3 shows the arrangements of the load meter 51 and the seating height meter 52.

As shown in FIG. 3, the load meter 51 is arranged on the lower side of the riding portion 13, specifically, on a lower surface portion of the seat portion 131.

The load meter 51 measures the load distribution (eccentricity) on the seat, and supplies the measured value to the center-of-gravity position estimation system 25.

By the arrangement on the lower side of the riding portion 13 (lower side with respect to a seat structure), the load meter 51 is configured to be capable of measuring not only the load of the loading object arranged in the riding portion, but also the load of an material object hooked on the backrest portion 132 or the headrest 133, and the loads of all loading objects arranged in other portions.

The load meter 51 is provided above a riding portion movement mechanism described later to move together with the riding portion 13.

Note that a weight of the vehicle body (hereinafter referred to as "vehicle body weight") and the center-of-gravity position thereof (hereinafter referred to as "vehicle body center-of-gravity position") are fixed and determined in advance at the time of designing, and therefore are not subject to the measurement by the load meter 51.

In the present embodiment, as the load meter 51, three or more load meters capable of measuring triaxial components are arranged.

The load meter 51 simultaneously measures the load distribution and the weight, and uses them for the identification of the loading object or a target position (angle) setting of the center-of-gravity position adjustment system.

For estimating the center-of-gravity position of the loading object, setting two load meters in the lateral direction suffices. However, by arranging three or more load meters, a fail-safe function is provided (i.e., measurement is possible even if one load meter fails).

By using the load meters capable of measuring the triaxial components and further utilizing data of the lateral acceleration and a lateral vehicle body tilt angle, the estimation of the center-of-gravity displacement at the time of a turn or when the vehicle body is tilted is made possible.

As shown in FIG. 3, the seating height meter 52 is arranged in the backrest portion 132.

The seating height meter 52 measures the height of the loading object (seating height of the occupant) by performing a scan in a perpendicular direction (height direction) with a mobile (scanning) optical sensor. Accordingly, measurement with high precision becomes possible. The measured value is supplied to the center-of-gravity position estimation system 25.

Note that a plurality of fixed sensors may be arranged in the perpendicular direction to discretely measure the height of the loading object.

Note that the seating height meter 52 in the present embodiment is made capable of measuring the height even if the loading object is largely displaced laterally by arranging a plurality of the optical sensors in the horizontal direction, and provides a fail-safe function by using the measured value of another optical sensor even if one optical sensor fails.

Also, it is possible to estimate the shape of the loading object using the seating height meter 52 of the present embodiment and use the shape for determining the type (human, material object, or none) thereof.

Note that another measuring instrument may be used instead as long as information regarding the center-of-gravity position can be obtained.

For example, as shown in FIG. 3D, the center-of-gravity displacement can be measured by a twisting torque measuring instrument. However, in this case, it is necessary to provide only one load meter in order to measure a mass of the loading object.

In FIG. 2, the actuator 60 includes the wheel drive actuator 61 which drives the drive wheel 11 in accordance with the command value supplied from the vehicle body driving control system 21.

The actuator 60 further includes a vehicle body tilt actuator 62 which controls the vehicle body tilt mechanism, the weight drive actuator 63 which controls the weight movement mechanism, and a riding portion movement actuator 64 which controls the seat parallel movement mechanism, in accordance with the command value supplied from the center-of-gravity position control system 23.

Note that the respective mechanisms will be described later.

A turning limit improvement control process of the vehicle as one embodiment configured as described above will be described next.

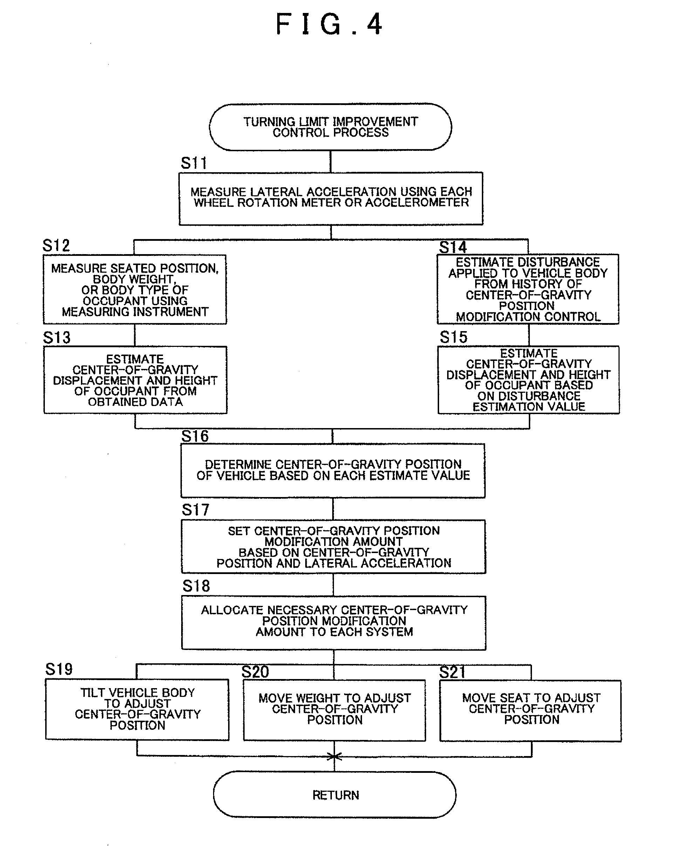

FIG. 4 is a flowchart showing the content of the turning limit improvement control process.

The lateral acceleration determination system 22 of the control ECU 20 acquires the wheel rotation angles of the respective drive wheels 11a and 11b from the wheel rotation meter 41 of the driving/attitude control sensor 40, and acquires the translational acceleration from the accelerometer 42. From these pieces of data, the lateral acceleration a of the vehicle body is determined and supplied to the center-of-gravity position control system 23 (step 11).

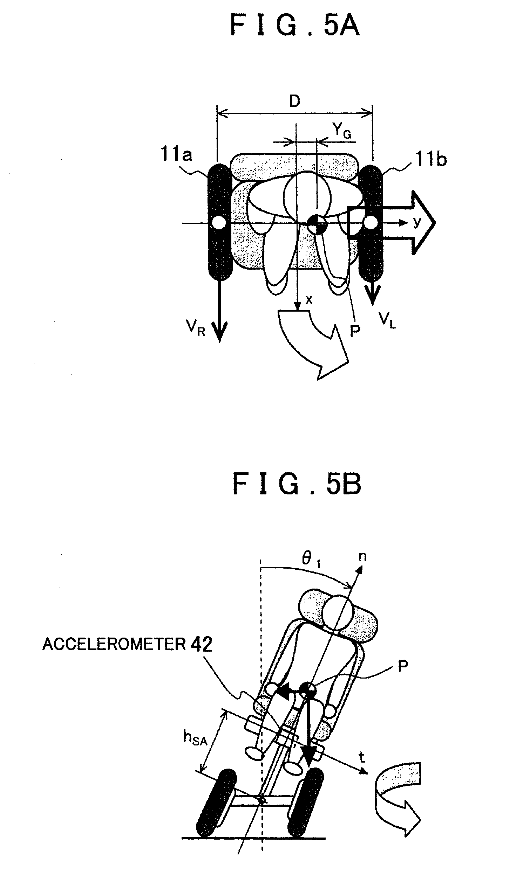

FIG 5 shows dynamic states of the vehicle when making a turn with the vehicle body being tilted.

For the measurement of the lateral acceleration a, there are (1) a method of using a measured value of the wheel rotation meter 41 (angle meter) for each wheel (drive wheels 11a and 11 b) and (2) a method of using a measured value of the accelerometer 42.

(1) Method of Using Measured Value of Wheel Rotation Meter 41

In this method, a lateral acceleration $a^{(1)}$ is calculated from the rotational speeds of the left and right drive wheels 11a and 11b.

As shown in FIG. 5A, when the circumferential speed of the drive wheel 11a on the right side when seen from the occupant is $V_R$ and the circumferential speed of the drive wheel 11b on the left side is $V_L$, the lateral acceleration $a^{(1)}$ in a center-of-gravity position P of the occupant (loading object) is calculated from the following Formula 1 and Formula 2.

$$\text{Formula 1}$$

$$a^{(1)} = V \cdot \Delta V / D$$

$$\text{Formula 2}$$

$$V = V_M - (Y_G/D)\Delta V$$

$$V_M = (1/2)(V_R + V_L)$$

$$\Delta V = V_R - V_L$$

$$V_R = R_W \omega_{WR}$$

$$V_L = R_W \omega_{WL}$$

Note that the representations of the symbols in Formula 2 are as follows.

$\omega_{WR}$: Right wheel angular speed
$\omega_{WL}$: Left wheel angular speed
$R_W$: Tire contact radius
D: Tread
$Y_G$: Displacement of a substantial center-of-gravity position (of which a value in a previous time step is used)

(2) Method of Using Measured Value of Accelerometer 42

In this method, a lateral acceleration $a\sim^{(2)}$ is calculated from the value of the translational acceleration measured by the accelerometer 42.

As shown in FIG. 5B, when a vehicle body center axis is an n-axis, an axis perpendicular to the vehicle body symmetry plane is a t-axis, (each axial direction component of) a sensor acceleration is $a_n$ and $a_t$, and the vehicle body tilt angle is $\theta_1$, the lateral acceleration $a\sim^{(2)}$ in a sensor attachment position is calculated from the following Formula 3.

Formula 3

$$a\sim^{(2)} = a_t\cos\theta_1 + a_n\sin\theta_1$$

In the present embodiment, the lateral acceleration a is determined from the lateral acceleration $a^{(1)}$ based on the measured value of the wheel rotation meter 41 and the lateral acceleration $a\sim^{(2)}$ based on the measured value of the accelerometer 42.

The vehicle body driving control system 21 determines whether the drive wheel is slipping. In the case where it is determined that it is not slipping, the value $a^{(1)}$ based on the measured value of the wheel rotation meter 41 is used as the lateral acceleration a. In the case where it is determined that it is slipping, the value $a\sim^{(2)}$ based on the measured value of the accelerometer 42 is used as the lateral acceleration a.

Hereinafter, a slip determination of the drive wheel of the present embodiment will be described.

First, the vehicle body driving control system 21 calculates a lateral acceleration $a\sim^{(1)}$ in the sensor attachment position from the lateral acceleration $a^{(1)}$ in an occupant center-of-gravity position based on the measured value of the wheel rotation meter 41 using the following Formula 4.

Note that $h_{SA}$ in Formula 4 below represents the distance from the pivot center in the vehicle body tilt to the acceleration sensor.

Formula 4

$$a\sim^{(1)} = a^{(1)} + (\Delta V/D)^2(Y_G - h_{SA}\sin\theta_1)$$

The vehicle body driving control system 21 performs a calculation of $\Delta a = a\sim^{(1)} - a\sim^{(2)}$, and determines that a slip is occurring in the case where an absolute value of $\Delta a$ is greater than or equal to a predetermined threshold value $\varepsilon$. Note that which one of the right drive wheel 11a and the left drive wheel 11b is slipping can be determined by the following Formula 5.

Formula 5

$a\sim^{(1)} - a\sim^{(2)} \geq \varepsilon$, when the drive wheel 11a on the right side is slipping.

$a\sim^{(1)} - a\sim^{(2)} \leq -\varepsilon$, when the drive wheel 11b on the left side is slipping.

After the lateral acceleration a has been obtained by the lateral acceleration determination system 22, the center-of-gravity position control system 23 measures the seated position, weight, and body type of the loading object (occupant or the like) using a measuring instrument (step 12).

Next, the center-of-gravity position estimation system 25 of the center-of-gravity position control system 23 estimates the center-of-gravity displacement and height of the loading object from obtained data (step 13: direct estimation).

First, the center-of-gravity position estimation system 25 obtains the mass of the loading object based on the load on the riding portion 13 obtained from the load meter 51.

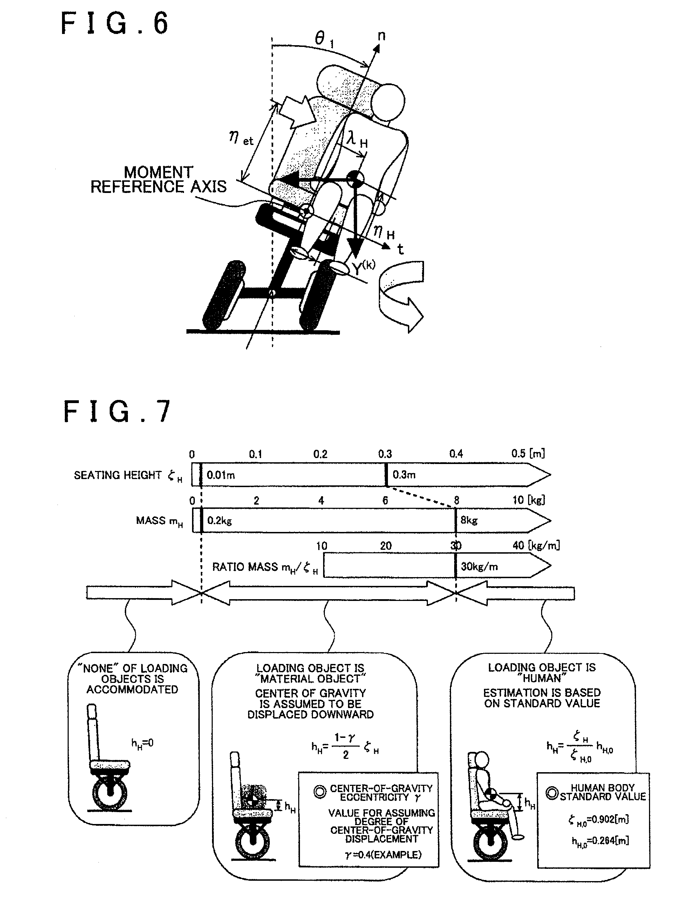

FIG. 6 shows dynamic states of an occupant (loading object) and the seat (riding portion 13) at the time of a turn.

When a loading object mass is $m_H$, a seat mass is $m_S$, an entire mass of the riding portion is shown as $m_C = m_H + m_S$, and a gravitational acceleration is g in FIG. 6, an equilibrium of a vertical component (component in a direction parallel to the vehicle body center axis) of a force applied to the riding portion is shown by the following Formula 6.
Formula 6

$$F_n = \Sigma F_n^{(k)} = -m_C(g\cos\theta_1 + a\sin\theta_1)$$

In Formula 6, $F_n^{(k)}$ represents a tension load measured by a k-th load meter out of N load meters, and a vertical force $F_n$ applied to the riding portion is obtained by taking a sum of the measured values of all of the N load meters.
Also, $\theta_1$ is the lateral vehicle body tilt angle measured by the driving/attitude control sensor 40 and a is the lateral acceleration obtained by the lateral acceleration determination system 22. By using these values, the loading object mass can be obtained at the time of a turn and at the time of a tilt.
In the present embodiment, the center-of-gravity position estimation system 25 obtains the loading object mass $m_H$ from the following Formula 7 obtained by modifying Formula 6.
Formula 7

$$m_H = (F_n/(g\cos\theta_1 + a\sin\theta_1)) - m_S$$

The value of the loading object mass $m_H$ is used for an overall center-of-gravity position evaluation, the type determination of the loading object, or the target position (angle) setting of the center-of-gravity position adjustment system.
Next, the center-of-gravity position estimation system 25 determines the type (human, material object, or none) of the loading object based on the height of the loading object (the seating height or the height of the material object) obtained from the seating height meter and the loading object mass $m_H$ calculated with Formula 7, and estimates a loading object center-of-gravity height $h_H$ with a method suitable for the type.
FIG. 7 illustrates the type determination of the loading object and the determination of the center-of-gravity height $h_H$ based on the type.
As shown in FIG. 7, certain threshold values are set for a seating height $\xi_H$, the mass $m_H$, and a ratio mass $m_H/\xi_H$, and the type of the loading object is determined based thereon. Note that the respective threshold values used in FIG. 7 and the following discriminants are examples, and are modified in accordance with an expected usage environment.

(a) It is determined that "none" of the objects is accommodated in the case where $m_H < 0.2$ kg and $\xi_H < 0.01$ m.
(b) It is determined that the loading object is a "human" in the case where $m_H > 8$ kg, $\xi_H > 0.3$ m, and $m_H/\xi_H > 30$ kg/m.
(c) It is determined that the loading object is a "material object" in other cases (cases other than (a) and (b)).

In determination conditions described above, the threshold value of the body weight is as small as 8 kg in the determination condition (b) for a human because a child is also expected to ride the vehicle. By adding the ratio mass (weight per unit seating height shown as $m_H/\xi_H$) to the determination condition for a human, the accuracy of the determination can be increased.
Note that, in order not to determine a small heavy material object (for example, mass of iron) as a human, $m_H/\xi_H < p$ (for example, 80 kg/m) may be added as a determination condition as an upper limit for a human.
Note that the determination conditions and determination values are examples, and may be appropriately changed and determined in accordance with the expected usage conditions.
The center-of-gravity position estimation system 25 estimates the center-of-gravity height (height from the seat portion 131) $h_H$ of the loading object in accordance with the determined type of the loading object as described below.
By determining the loading object in this manner and changing an estimation method (evaluation formula) for the center-of-gravity height $h_H$ in accordance with the type, the value can be estimated more accurately.
(a) In the case where the loading object is determined as "none," $h_H = 0$.

(b) In the case where the loading object is determined as a "material object," the center-of-gravity height $h_G$ is obtained from the following Formula 8 using an eccentricity $\gamma$ representing the degree of a downward displacement, assuming that the center of gravity is displaced downward with respect to a geometric center. The eccentricity $\gamma$ is an assumed value set in advance, and $\gamma = 0.4$ in the present embodiment.

$$\text{Formula 8}$$

$$h_H = ((1 - \gamma)/2)\zeta_H$$

(c) In the case where the loading object is determined as a "human," the center-of-gravity height $h_H$ is obtained from Formula 9 with a body type of an average person as a reference.

In Formula 9, $\xi_{H,0}$ and $h_{H,0}$ are standard values of the seating height and the center-of-gravity height, and $\xi_{H,0} = 0.902$ m and $h_{H,0} = 0.264$ m in the present embodiment.

$$\text{Formula 9}$$

$$h_H = (\zeta_H/\zeta_{H,0})h_{H,0}$$

Note that, although a case of obtaining the type and the center-of-gravity height of the loading object in accordance with FIG. 7 is described herein, the type and the center-of-gravity height of the loading object may be obtained using a more complicated condition or evaluation formula (map).

Next, the center-of-gravity position estimation system 25 obtains a center-of-gravity displacement $\lambda_H$ of the loading object in the lateral direction based on the load distribution on the riding portion 13 obtained from the load meter 51 and the loading object mass $m_H$ and the loading object center-of-gravity height $h_H$ which has been acquired as loading object information.

In FIG. 6, an equilibrium of a horizontal component (component in a direction perpendicular to the vehicle body symmetry plane) of the force applied to the riding portion and a moment around a reference axis (intersection line of the vehicle body symmetry plane and an installation surface of the load meter 51) is shown by the following Formula 10. Note that a centrifugal force caused by angular speed of a vehicle body tilting motion (or a tilting motion of the riding portion 13) and an inertia force caused by an angular acceleration are not considered.

In Formula 10, $m_c$, $\lambda_c$, $h_c$, and $\eta_c = h_c + \delta_s$ respectively represent the mass, the center-of-gravity displacement (distance from a vehicle body axis to the center of gravity), the center-of-gravity height (distance from a seat surface of the seat portion 131 to the center of gravity), and a load meter reference center-of-gravity height (distance from the installation surface of the load meter 51 to the center of gravity) of the entire riding portion, and are shown in Formula 11.

In Formula 10 and Formula 11, $m_H$, $\lambda_H$, $h_H$, $\eta_H = h_H + \delta_s$ represent the mass, the center-of-gravity displacement, the center-of-gravity height, and the load meter reference center-of-gravity height of the loading object, $m_S$, $\lambda_S$, $h_S$, $\eta_S = hs + \delta_s$ represent the mass, the center-of-gravity displacement, the center-of-gravity height, and the load meter reference center-of-gravity height of the seat, $\delta_S$ represents the thickness of the seat portion 131 (distance from the installation surface of the load meter 51 to the seat surface of the seat portion 131), and g represents the gravitational acceleration.

$$\text{Formula 10}$$

$$F_t = \Sigma F_t^{(k)} = m_c(g\sin\theta_1 - a\cos\theta_1) - m_H\lambda_H(\cdot\cdot) + F_{et}$$

$$T_{tn} = \Sigma(F_n^{(k)}Y^{(k)}) = F_n\lambda_c - F_t\eta_c + m_H\lambda_H(\cdot\cdot)(\eta_H - \eta_c) - F_{et}(\eta_{et} - \eta_c)$$

Formula 11

$$m_c = m_H + m_S$$

$$\lambda_c = (m_H \lambda_H + m_S \lambda_S)/m_c$$

$$\eta_c = (m_H \eta_H + m_S \eta_S)/m_c$$

In Formula 10, $F_n^{(k)}$ and $F_t^{(k)}$ are the tension load and a lateral load (component in a direction perpendicular to the vehicle body symmetry plane) measured by the k-th load meter out of the N load meters, and the vertical force $F_n$ and a lateral force $F_t$ applied to the riding portion are obtained by taking sums from all of the N load meters. Also, $Y^{(k)}$ represents the attachment position (distance from the vehicle body symmetry plane) of the k-th load meter and a moment $T_m$ applied to the riding portion is obtained by taking a sum of products of $Y^{(k)}$ and $F_n^{(k)}$.

In the same Formula 10, $\theta_1$ is the lateral vehicle body tilt angle measured by the driving/attitude control sensor 40, and a is the lateral acceleration obtained by the lateral acceleration determination system 22. By using these values, the center-of-gravity displacement and the center-of-gravity height can be obtained at the time of a turn and at the time of a tilt.

In Formula 10, $F_{et}$ represents an external force, and corresponds to a force of an external push by a human or a force due to wind. Also, $\eta_{et}$ is an application point height (height from the installation surface of the load meter 51) of the external force. These values are unknown. Together with the center-of-gravity displacement $\lambda_H$ of the loading object, the two formulas of Formula 10 include three unknown quantities.

Thus, the external force $F_{et}$ and the application point height $\eta_{et}$ cannot be both obtained with accuracy, but assuming one value allows the other value to be determined. For example, assuming an expected position of an aerodynamic center (application point of air resistance) for the application point height $\eta_{et}$ thereof enables the magnitude $F_{et}$ of the air resistance to be evaluated and a value thereof to be used for the driving/attitude control.

In the present embodiment, $F_{et} = 0$, assuming that the influence of the external force is small. Accordingly, the two formulas of Formula 10 can be changed into a form shown by Formula 12 below. Formula 12 is an algebraic formula, and enables a simple and stable evaluation of the loading object center-of-gravity displacement $\lambda_H$.

That is, the center-of-gravity position estimation system 25 obtains the center-of-gravity displacement $\lambda_H$ of the loading object based on Formula 12 (and Formula 11) using the obtained weight $m_H$ and the center-of-gravity height $h_H$ of the loading object.

Formula 12

$$\lambda_H = (m_c \lambda_c - m_S \lambda_S)/m_H$$

$$\lambda_c = \{F_t \eta_c + F_{Ha}(\eta_H - \eta_c) + T_{tn}\}/F_n$$

$$F_{Ha} = F_t - m_c(g\sin\theta_1 - a\cos\theta_1)$$

Along with the direct estimation (steps 12 and 13) of the center-of-gravity displacement $\lambda_H$ and height $h_H$ of the loading object as described above, the center-of-gravity position control system 23 estimates the disturbance in a center-of-gravity position control using the disturbance observer 24, and estimates (as the indirect estimation) the center-of-gravity displacement and height of the loading object based on a disturbance estimate value thereof (steps 14 and 15).

First, the disturbance observer 24 estimates the "disturbance" from a history of a center-of-gravity position modification control (step 14).

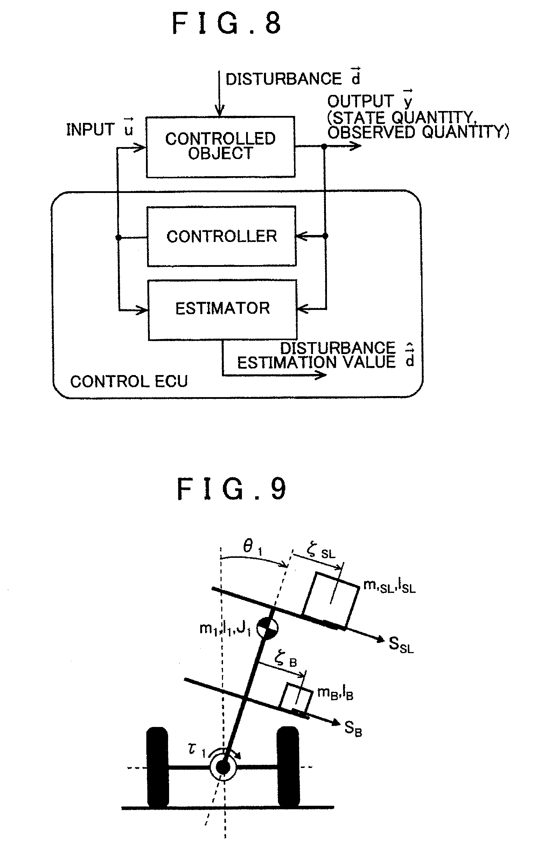

FIG. 8 conceptually shows a method for estimating the disturbance using the disturbance observer 24.

In FIG. 8, a controller acquires an output (state amount) $y(\rightarrow)$, and provides an input $u(\rightarrow)$ to a controlled object so that a value thereof approaches a target value. At this time, an estimator acquires the input $u(\rightarrow)$, and obtains an estimated output $y(^\wedge\rightarrow)$ from the input $u(\rightarrow)$ based on a model of the controlled object. Simultaneously, the estimator acquires the actual output $y(\rightarrow)$, and compares the value thereof and the estimate value $y(^\wedge\rightarrow)$. A factor of a difference thereof is estimated as the "disturbance," and a difference between the actual controlled object and the model is estimated from a disturbance estimate value $d(^\wedge\rightarrow)$.

In the center-of-gravity position modification control of the present embodiment, the controller of FIG. 8 represents the center-of-gravity position control system 23, the estimator represents the disturbance observer 24, the controlled object represents the vehicle body tilt mechanism, the weight movement mechanism, or the seat (riding portion 13) movement mechanism as the center-of-gravity position adjustment mechanism, the input $u(\rightarrow)$ represents a drive torque (force) command value of the actuator which operates each center-of-gravity position adjustment mechanism, the output $y(\rightarrow)$ represents the vehicle body tilt angle, the weight position, or a seat position as the state amount of the center-of-gravity position adjustment mechanism.

The model is an object of the center-of-gravity position modification control when respective expected values (nominal values) of the mass and the center-of-gravity height of the loading object are $m_H{}^{(n)}$ and $h_H{}^{(n)}$, the center of gravity thereof is on the vehicle body axis, and the vehicle is being driven to proceed straight. That is, an amount of influence on the center-of-gravity position control system caused by three factors of the center-of-gravity displacement of the loading object, a difference from the expected value (nominal value) of a dynamic parameter (the mass, the center-of-gravity height, or the inertia moment) of the loading object, and the centrifugal force caused by a turn is assumed as a disturbance $d(\rightarrow)$, and the values of the mass, the center-of-gravity height, and the center-of-gravity displacement of the loading object are estimated based on the estimate value $d(^{\wedge}\rightarrow)$ thereof.

Hereinafter, a derivation of a formula necessary for obtaining the disturbance estimate value $d(^{\wedge}\rightarrow)$ will be described.

FIG. 9 shows a dynamic model of the center-of-gravity position adjustment system.

Respective symbols used in FIG. 9 and Formulas 14, 15, and 16 below are as follows.

$\theta_1$: Vehicle body tilt angle

$\xi_B$: Balancer position (displacement from a vehicle body center)

$\xi_{SL}$: Riding portion position (displacement form the vehicle body center)

$\tau_1$: Vehicle body tilt torque (actuator output)

$S_B$: Weight drive force (actuator output)

$S_{S1}$: Riding portion drive force (actuator output)

g: gravitational acceleration

a: lateral acceleration (value in the substantial center-of-gravity position)

$m_1$: Vehicle body tilted portion total mass (for movable portions considering the occupant)

$m_B$: Weight mass

$m_{SL}$: Riding portion mass (considering the occupant)

$l_1$: Vehicle body tilted portion basic center-of-gravity distance (distance from the pivot center)

$l_B$: Weight basic center-of-gravity distance (a distance from the pivot center)

$l_{SL}$: Riding portion basic center-of-gravity distance (distance from the pivot center)

$J_1$: Vehicle body tilted portion inertia moment (value for around the pivot center and considering the occupant)

$D_1$: Viscous friction coefficient with respect to a pivot motion of the vehicle body tilted portion

$D_B$: Viscous friction coefficient with respect to a translational motion of the weight

$D_{SL}$: Viscous friction coefficient with respect to a translational motion of the riding portion

$m_H$: Loading object mass

$\lambda_H$: Loading object center-of-gravity displacement

$1_H$: Loading object center-of-gravity distance

$J_H$: Loading object inertia moment (value for around the pivot center)

A superscript (n) indicates that a value is the expected value (nominal value) of a parameter value regarding the occupant.

In FIG. 9, the dynamic model showing the center-of-gravity position adjustment system is expressed in a form of a linear second order differential equation as shown in the following Formula 13.

In Formula 13, $x_S(\rightarrow)$ is a basic state, $u(\rightarrow)$ is the input, and $P_u$ is an input application route, and these are shown by Formula 14. Also, $M_S$, $C_S$, and $K_S$ are parameter matrices representing dynamic characteristics of the system, and are shown in Formula 16. Note that I represents a unit matrix.

Formula 13

Formula 14

Formula 15

In Formula 13, $d(\rightarrow)$ represents the disturbance, and is shown in the following Formula 16 as a sum of three values of a disturbance $d_a(\rightarrow)$ due to centrifugal force at the time of a turn, a disturbance $d\lambda(\rightarrow)$ due to the center-of-gravity displacement of the loading object, and a disturbance $d\Delta(\rightarrow)$ due to the difference in the dynamic parameter of the loading object. Also, $P_d$ is a disturbance entrance route, and is shown in the following Formula 17.

Formula 16

Formula 17

$$P_d = I$$

Next, by expressing Formula 13 of the dynamic model in a form of a state equation, Formula 18 is obtained. A state variant vector $x(\rightarrow)$ and respective matrices in Formula 18 are as shown in Formula 19.

Formula 18

Formula 19

A disturbance observer for obtaining the estimate value $d(^\wedge\rightarrow)$ for the disturbance $d(\rightarrow)$ of the controlled object model of Formula 18 is shown by the following Formula 20.

In Formula 20, $u(\rightarrow)$ is the input, $x(\rightarrow)$ is the state amount, and a superscript (k) indicates a value of a time step in discrete data, i.e., at a time t which equals $k\Delta t$ ($\Delta t$ being a discrete-time unit).

Formula 20

The disturbance observer 24 obtains the disturbance estimate value $d(\rightarrow)$ from the input $u(\rightarrow)$ and the state amount $x(\rightarrow)$ using the disturbance observer of Formula 20 developed as described above.

In Formula 20, L is a feedback gain (matrix) of the observer, and a value thereof is determined by, for example, a pole placement method in consideration of convergence time and stability of the estimate value. Generally, since shortening an estimate time (convergence time of the estimate value) causes a decrease in the stability thereof, a certain amount of time is necessary for the estimation.

The observer shown by Formula 20 is a minimum dimension observer, and is capable of estimating the disturbance with a small calculation amount (short calculation time) by directly using an observed value for the state amount $x(\rightarrow)$. Note that, in the case where a robustness of estimation calculation is prioritized even though the calculation amount is large, a perfect dimension observer using an estimated amount thereof may also be used for the state amount $x(\rightarrow)$.

Also, in the present embodiment, although all state amounts $x(\rightarrow)$ are acquired as the outputs $y(\rightarrow)$, i.e., it is expected that $y(\rightarrow) = x(\rightarrow)$, an estimate value may be used for a part of the state amounts for the purpose of reducing the number of necessary sensors or the like.

The disturbance estimate value $d(\Lambda\rightarrow)$ estimated as described above is supplied from the disturbance observer 24 to the center-of-gravity position estimation system 25.

The center-of-gravity position estimation system 25 estimates the mass and the center-of-gravity position (the center-of-gravity displacement and height) of the loading object based on the disturbance estimate value $d(^\wedge\rightarrow)$ (step 15).

By organizing Formula 16 described above, the disturbance $d(\rightarrow)$ can be shown as a product of a disturbance coefficient matrix A and a state amount vector $\eta(\rightarrow)$ as shown in Formula 21.

Formula 21

First, the center-of-gravity position estimation system 25 obtains the disturbance coefficient matrix A using a least-squares method based on Formula 21 showing the details of the disturbance.

That is, the disturbance coefficient matrix A is obtained from the following Formula 22 using a time history (k = 1 to N) of a disturbance estimate value $d^{(k)}(^\wedge\rightarrow)$ and a state amount vector $\eta^{(k)}(\rightarrow)$ at a reference time shown as $T_{ref} = (N - 1)\Delta t$

Formula 22

In Formula 22, accelerations (angular accelerations) $\theta_1(\cdot\cdot)$ and $\xi_{SL}(\cdot\cdot)$ of the state amount vector $\eta(\rightarrow)$ are obtained by a difference in position (angle) or speed (angular speed) obtained by the sensor.

For the reference time $T_{ref}$, a time longer than an estimated convergence time (estimated time) of the observer needs to be set.

Note that, in Formula 22, a correlation of $\eta(\rightarrow)$ may not be considered, i.e., the calculation may be simplified by approximating a non-diagonal component of a tensor product $\eta(\rightarrow)\eta(\rightarrow)$ of the state amount vector to zero.

Next, the center-of-gravity position estimation system 25 obtains a loading object mass deviation $\Delta(m_H)$ and a loading object first moment deviation $\Delta(m_H l_H)$ as deviations (differences from the expected values) of the dynamic parameters of the loading object from respective components of the obtained disturbance coefficient matrix A.

As is clear from the notation of the disturbance coefficient matrix A in Formula 21, the two loading object parameter deviations $\Delta(m_H)$ and $\Delta(m_H l_H)$ correspond to a plurality of elements of the disturbance coefficient matrix A, and a value of the parameter deviation can be obtained from either one.

In contrast to such redundancy, a more accurate evaluation of the parameter deviation is achieved in the present embodiment by providing each element of the disturbance coefficient matrix A with a variance (degree of variability of the value) of the corresponding state amount as a weight. This is a result of taking into consideration that the value of the element of the disturbance coefficient matrix A can be evaluated more accurately as a time fluctuation (variability of the value) of the element of the state amount vector $\eta(\rightarrow)$ increases in the least-squares method of Formula 22.

That is, the loading object mass deviation $\Delta(m_H)$ and the loading object first moment deviation $\Delta(m_H l_H)$ are obtained respectively from Formulas 23 and 24.

In Formulas 23 and 24, $A_{ij}$ represents an element in an i-th row and aj-th column of the disturbance coefficient matrix A, and weights $W_2$, $W_3$, $W_4$, $W_5$, and $W_6$ for respective evaluation values based thereon are shown in Formula 25.

Note that, in these formulas, $m_1$ represents the mass of the vehicle body tilted portion, $l_1$ represents the basic center-of-gravity distance from the vehicle body tilted portion, $m_{SL}$ represents the riding portion mass, g represents the gravitational acceleration, a represents the lateral acceleration, $\theta_1$ represents the vehicle body tilt angle, $\xi_{SL}$ represents the riding portion position, and x(-) represents a time average value of x in the reference time $T_{ref}$.

Formula 23

Formula 24

Formula 25

Finally, the center-of-gravity position estimation system 25 obtains the mass mix, the center-of-gravity height $h_H$, and the center-of-gravity displacement $\lambda_H$ of the loading object according to the following Formula 26 from the obtained loading object mass deviation $\Delta(m_H)$ and the loading object first moment deviation $\Delta(m_H l_H)$.

Note that g represents the gravitational acceleration in Formula 26.

Formula 26

After the estimate values of the mass and the center-of-gravity position of the loading object from the direct estimation (steps 12 and 13) and the estimate values of the same from the indirect estimation (steps 14 and 15) have been acquired by the center-of-gravity position estimation system 25 in this manner, the center-of-gravity position control system 23 determines a mass and a center-of-gravity position of the entire vehicle based on both estimate values (step 16).

First, the center-of-gravity position control system 23 determines the respective parameter values to be applied to the control by the following steps of (i) to (iv) from the direct estimate value of the measuring instrument and the indirect estimate value of the observer for the mass $m_H$, the center-of-gravity height $h_H$, and the center-of-gravity displacement $\lambda_H$ of the loading object. In this manner, a more accurate estimation of the parameter value is achieved by using the estimate values of the two estimation methods distinctively or in combination.

(i) Distinctive Use According to Driving State

The disturbance observer 24 cannot estimate the parameter value with high precision if a change in the state amount is large to a certain degree and there is not enough observation time. Thus, at the time of a control start (between the start of control until a set time T1) or at the time of a moderate driving, the direct estimate value is applied directly to the control and is provided to the disturbance observer 24 as a default value.

Note that, regarding a determination on whether the driving state is "moderate," a current driving state is determined to be moderate when an inequality shown in the following Formula 27 is satisfied, for example.

In Formula 27, $W_0$ is a threshold value set in advance, and the driving state is determined based on this value. Also, a represents the lateral acceleration, $\theta_1$ represents the vehicle body tilt angle, $\xi_{SL}$ represents the riding portion position, g represents the gravitational acceleration, $1_1$ represents (the nominal value of) the vehicle body tilted portion basic center-of-gravity distance, and a suffix $^{(k)}$ represents the time step.

Formula 27

(ii) Combined Use for Fail-Safe Function

In the present embodiment, regarding the two estimate values from the direct estimation and the indirect estimation, one estimate value is used as a fail determination index for the estimation system of the other.

That is, the center-of-gravity position control system 23 determines that one of the estimate values is abnormal in the case where a difference between the two estimate values is large (greater than or equal to a predetermined value). After a detailed examination, the estimation system with a higher possibility of abnormality is assumed to have failed, and the estimate value of the other is adopted.

Note that the two estimate values may be constantly used as a fail-safe determination index, independently from the other (i), (iii), and (iv).

Regarding a determination on which one of the two estimate values is abnormal, the direct estimation system using the measuring instrument is determined to be abnormal when at least one of conditions shown by the following Formula 28 and Formula 29 is satisfied, for example.

Formula 28 shows a condition for detecting an unnatural change in an output value, and Formula 29 shows a condition for detecting a non-output state. In the two formulas, $p_{[1]}$ represents a parameter estimate value (one of the mass, the center-of-gravity height, and the center-of-gravity displacement of the loading object) of the measuring instrument. Also, $p_{[1]max}$ is a threshold value of the determination condition, and an appropriate value is set in advance.

Formula 28

Formula 29

(iii) Distinctive Use According to Frequency Component

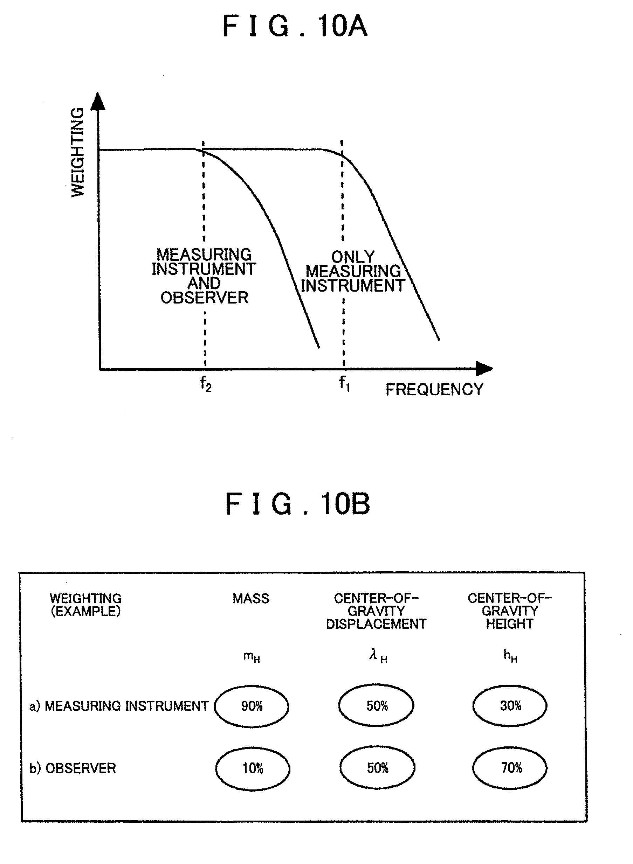

FIG. 10 shows an example of weighting when both estimate values of the direct estimation and the indirect estimation are used.

In the direct estimation (steps 12 and 13) and the indirect estimation (steps 14 and 15), there are respective evaluable upper limit frequencies.

That is, there is an upper limit frequency $f_1$ based on performances (character frequency or responsive performance) of the respective sensors for the direct estimation using the measuring instrument, and there is an upper limit frequency $f_2$ based on an estimate value convergence speed (estimated time) determined by the feedback gain for the indirect estimation using the observer.

In the present embodiment, as shown in FIG. 10A, the two estimate values are categorized into three frequency bands in which the upper limit frequencies $f_1$ and $f_2$ of the estimation methods are the threshold values, and the weightings for the two estimate values are changed according to the respective frequency bands.

First, a frequency component which is greater than or equal to the measuring instrument measurement limit $f_1$ in the direct estimation is not taken into consideration.

Next, for a frequency component which is greater than or equal to the stable estimation limit $f_2$ of the observer, the estimate value of the direct estimation is adopted. For a frequency component less than or equal to the stable estimation limit $f_2$, the two estimate values are taken into consideration to determine the value of the parameter to be used for the control.

The frequency categorization can be achieved by using two low-pass filters. In the case where the parameter estimate value of the direct estimation is $p_{[1]}$ and the parameter estimate value of the indirect estimation is $p_{[2]}$, a high frequency component $p_{High}$ of the direct estimate value and low frequency components $p_{Low[1]}$ and $p_{Low[2]}$ of the direct estimate value and the indirect estimate value can be extracted for the two estimate values $p_{[1]}$ and $p_{[2]}$ by Formula 31 and Formula 32, respectively.

Formula 30

Formula 31

In Formulas 30 and 31, $F_{LPF}[x^{(k)};f_c]$ is a function representing the low-pass filter, while $x^{(k)}$ represents a filtered variable, and $f_c$ represents a cutoff frequency. The low-pass filter $F_{LPF}$ can be provided by a first filter as shown by the following Formula 32, for example. Note that $T_s$ represents a sampling period in Formula 32.

Formula 32

(iv) Distinctive Use According to Reliability

Depending on a type (the mass $m_H$, the center-of-gravity displacement $\lambda_H$, or the center-of-gravity height $h_H$) of the estimated parameter, which one of the direct estimate value and the indirect estimate value is more accurate, i.e., the reliability thereof, differs.

Thus, in the present embodiment, a weight that has been set in advance according to the reliability thereof is assigned to the low frequency component of each parameter estimate value. When the weight for the direct estimate value is $\omega_{[1]}$ and the weight for the indirect estimate value is $\omega_{[2]}$, the mass $m_H$, the center-of-gravity displacement $\lambda_H$, and the center-of-gravity height $h_H$ of the loading object as the parameter values to be applied to the control are obtained by the following Formula 33.

Formula 33

An example of set values of the weights for the two estimate values shown in FIG. 10B is described below. The set values are based on a high reliability of the mass $m_H$ in the direct estimation using the measuring instrument and a high reliability of the center-of-gravity height $h_H$ in the indirect estimation using the observer.

· Riding portion mass $m_H$: $\omega_{m[1]}= 0.9$ as direct estimation weight, and $\omega_{m[2]} = 0.1$ as indirect estimation weight
· Riding portion center-of-gravity displacement $\lambda_H$: $\omega\lambda_{[1]} = 0.5$ as direct estimation weight, and $\omega\lambda_{[2]} = 0.5$ as indirect estimation weight
· Riding portion center-of-gravity height $h_H$: $\omega_{h[1]} = 0.3$ as direct estimation weight, and $\omega_{h[2]} = 0.7$ as indirect estimation weight

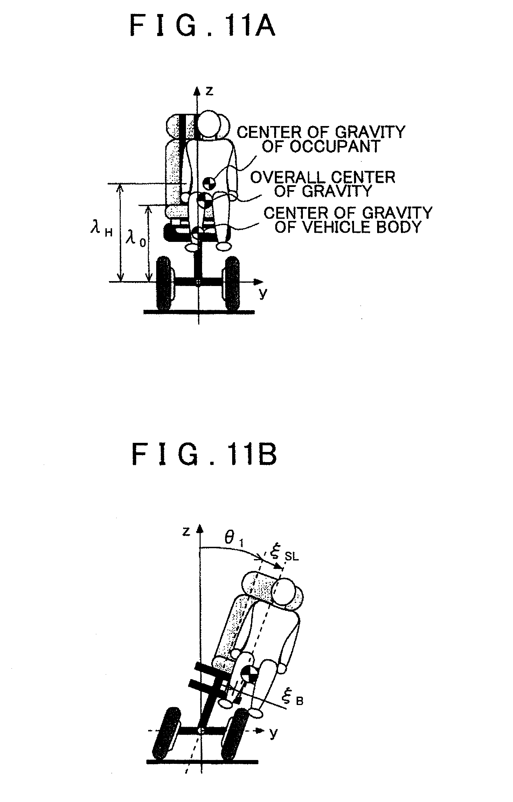

After the mass $m_H$, the center-of-gravity displacement $\lambda_H$, and the center-of-gravity height $h_H$ as the dynamic parameters of the loading object have been determined, the center-of-gravity position control system 23 obtains the center-of-gravity position of the entire vehicle including the vehicle body and the loading object (occupant or the like). FIG. 11 shows the center-of-gravity positions in the basic state and an adjusted state.

First, the center-of-gravity position control system 23 obtains the center-of-gravity position of the vehicle in a state where the respective center-of-gravity position adjustment mechanisms are not operated, i.e., in a state where the vehicle body is not tilted and the weight and the riding portion are in the center (reference position), as shown in FIG. 11A.
Note that, hereinafter, the state described above is called the basic state, and the center-of-gravity position of the vehicle in this state is called a basic center-of-gravity position.

A mass m of the vehicle, and a basic center-of-gravity displacement $\lambda$ and a basic center-of-gravity distance 1 as the basic center-of-gravity position are obtained from the following Formula 34.
In Formula 34, $m_H$, $\lambda_H$, $h_H$, and $l_H = h_H + l_0$ respectively represent the mass, the center-of-gravity displacement, the center-of-gravity height, and the center-of-gravity distance of the loading object. Herein, $l_0$ is the distance from the pivot center of the vehicle body tilt to the seat surface of the seat portion 131. Also, $m_{CB}$ and $l_{CB}$ respectively represent the mass and the center-of-gravity distance of the vehicle body. Note that the center-of-gravity displacement of the vehicle body is shown as $\lambda_{CB} = 0$.

$$\text{Formula 34}$$

$$m = m_H + m_{CB}$$

$$\lambda = m_H\lambda_H/m$$

$$l = (m_Hl_H + m_{CB}l_{CB})/m$$

Next, the center-of-gravity position control system 23 obtains the center-of-gravity position of the vehicle in a state where the respective center-of-gravity position adjustment mechanisms are operated, i.e., in a state where the vehicle body is tilted and the weight or the riding portion is moved from the center (reference position), as shown in FIG. 11B.
Note that, hereinafter, the state described above is called the adjusted state, and the center-of-gravity position of the vehicle in this state is called a substantial center-of-gravity position.

When the pivot center of the vehicle body tilt is a reference point, a displacement $Y_G$ in an axle direction from the reference point and a displacement $Z_G$ in the perpendicular direction are obtained from the following Formula 35 based on the entire mass m, the basic center-of-gravity displacement $\lambda$, and the basic center-of-gravity distance 1.
In Formula 35, $\theta_1$ represents the vehicle body tilt angle, $m_{SL}$ represents the mass moved by the riding portion movement mechanism, $\xi_{SL}$, represents the riding portion position, $m_B$ represents the mass moved by the weight movement mechanism, and $\xi_B$ represents the weight position.

$$\text{Formula 35}$$

$$Y_G = l\sin\theta_1 + \lambda_0\cos\theta_1$$

$$Z_G = l\cos\theta_1 - \lambda_0\sin\theta_1$$

$$\lambda_0 = \lambda + (m_{SL}\xi_{SL} + m_B\xi_B)/m$$

After the center-of-gravity position of the vehicle has been determined based on the respective estimate values, the center-of-gravity position control system 23 sets a center-of-gravity position modification amount based on the center-of-gravity position and the lateral acceleration (step 17).

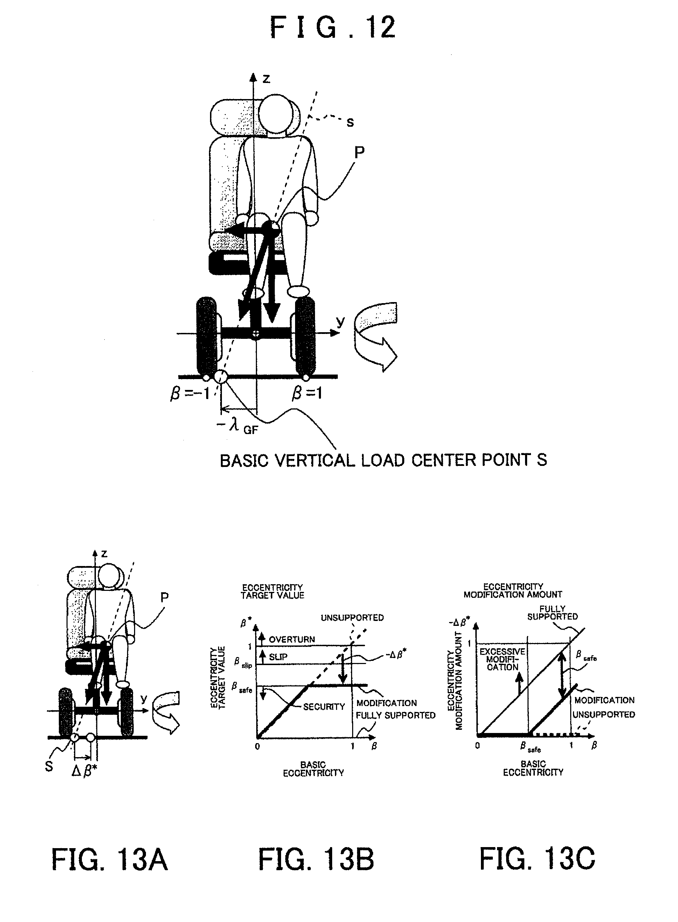

FIG. 12 shows the basic vertical load center point S, a basic vertical load center position $\lambda_{GF}$, and a basic vertical load eccentricity $\beta$ determined from the lateral acceleration and the basic center-of-gravity position.

As shown in FIG. 12, the basic vertical load center point S is an intersection point of the ground and a line parallel to the resultant vector F of the centrifugal force and the gravitational force and passing through the center of gravity. A relative position (displacement) of the point S with respect to the vehicle body center axis is the basic vertical load center position $\lambda_{GF}$.
The basic vertical load eccentricity $\beta$ is a value in which $\lambda_{GF}$ is nondimensionalized with D/2 representing a half tread. If $-1<\beta<1$, the basic vertical load center point exists between the two drive wheels 11.

By knowing the stability in the basic state where the respective center-of-gravity position adjustment mechanisms are not operated in this manner, whether an adjustment of the center-of-gravity position is necessary can be determined easily, and an unnecessary center-of-gravity position adjustment or offset operation (operation of a plurality of mechanisms in which effects thereof are offset) of the center-of-gravity position adjustment mechanisms can be avoided.

The basic vertical load eccentricity $\beta$, the basic vertical load center position $\lambda_{GF}$, and a lateral acceleration $a_{BC}$ in the basic center-of-gravity position are obtained by the following Formula 36.

In Formula 36, $R_w$ is the tire contact radius, D is the tread (distance between the two drive wheels 1a and 11b), $Y_G$ is a substantial center-of-gravity displacement, $\lambda$ is the basic center-of-gravity displacement, 1 is the basic center-of-gravity distance, $\theta_1$ is the vehicle body tilt angle, $\Delta V$ is a wheel rotation circumferential speed difference, and g is the gravitational acceleration.

Formula 36

$$\beta = \lambda_{GF}/(D/2)$$

$$\lambda_{GF} = \lambda - (a_{BC}/g)(1 + R_W)$$

$$a_{BC} = a + (\Delta V/D)^2(Y_G - \lambda + R_W \sin\theta_1)$$

Note that Formula 36 takes into consideration a change of an acceleration value due to the difference of the center-of-gravity position in the basic state and a substantial state. However, in the case where the measured value of the accelerometer is used (in the case of a slip), a correction of the acceleration is not performed, and $a_{BC} = a$.

From a value of the basic vertical load eccentricity $\beta$ obtained from Formula 36, the stability of the vehicle in the basic state can be determined as follows.

(a) $\beta=0$ ⋯ Neutral state which is the most stable state

(b) $|\beta| > 1$ ⋯ Vehicle body overturn in which the vehicle body overturns in a direction of displacement of a basic vertical load point

(c) $|\beta| < \beta_{slip}$ ⋯ One wheel slip in which the drive wheel on the far side from the basic vertical load point slips (and there is a high possibility of the vehicle spinning and overturn as a result)

The threshold value $\beta_{slip}$ in the condition (c) for the one wheel slip can be obtained from the following Formula 37. In Formula 37, $a_{BC}$ is the lateral acceleration in the basic center-of-gravity position, g is the gravitational acceleration, $\lambda_{GF}$ is the tire contact radius, and m is the mass of the vehicle. Also, $\tau_W{}^*$ represents a drive torque of the drive wheel on the far side from the basic vertical load center point.

Formula 37

In Formula 37, $\mu$ is a friction coefficient between the tire and the ground surface. An expected value set in advance is provided in the present embodiment, but a measured value of a measuring instrument, an estimate value of an observer, or the like may also be used.

As is clear from Formula 37, $\beta_{slip}$ is smaller than 1. That is, in the case where the drive torque is provided, one wheel slips before the vehicle overturns. Thus, in the present embodiment, the slip limit $\beta_{slip}$ is a stable limit.

Next, the center-of-gravity position control system 23 determines a vertical load eccentricity modification amount $\Delta\beta^*$ based on the obtained basic vertical load eccentricity $\beta$.

FIG. 13 shows a vertical load eccentricity target value $\beta^*$ and the vertical load eccentricity modification amount $\Delta\beta^*$ for the basic vertical load eccentricity $\beta$.

The center-of-gravity position control system 23 obtains the vertical load eccentricity modification amount $\Delta\beta^*$ from FIGS. 13B and 13C or the following Formula 38, for example.

Formula 38

In Formula 38, $\beta_{safe}$ is an eccentricity restriction value, and the adjustment of the center-of-gravity position is not performed unless the basic vertical load eccentricity $\beta$ exceeds this value. Accordingly, unnecessary energy consumption for a fine movement of a vertical load point can be eliminated, and a rocking behavior of the riding portion 13 and the loading object can be suppressed.

The eccentricity restriction value $\beta_{safe}$ is set by the following Formula 39, for example.

Formula 39

$$\beta_{safe} = \beta_{slip}/C_{safe}$$

In Formula 39, $C_{safe}$ is a security coefficient. By making this value greater than 1, i.e., setting $\beta_{safe}$ to be lower than $\beta_{slip}$, security is ensured with respect to error in measurement or estimation of the center-of-gravity position or the lateral acceleration or to high frequency fluctuation which cannot be dealt with by the respective center-of-gravity position adjustment mechanisms. In the present embodiment, this value is shown as $C_{safe} = 1.5$.

Note that, within a range of a security region where $|\beta|^* < \beta_{safe}$, another modification value determination method may be used instead of Formula 38. For example, as the most secure and fully-supported condition, it may be such that $\beta^* = -\beta$ ($\beta^* = 0$).

Next, the center-of-gravity position control system 23 allocates the calculated vertical load eccentricity modification amount $\Delta\beta^*$ to the center-of-gravity position adjustment mechanisms (step 18).

The present embodiment includes the vehicle body tilt mechanism, the weight movement mechanism, and the riding portion movement mechanism as mechanisms for adjusting the center-of-gravity position, and the respective mechanisms have the following characteristics.

The vehicle body tilt mechanism is effective for a slow and large fluctuation in a low frequency region since the target inertia is large, and can tilt the riding portion and the occupant (riding portion) together with the vehicle. This advantageous effect can be used in adjusting the lateral acceleration sensed by the occupant.

The weight movement mechanism is effective for a fast and small fluctuation in a high frequency region since the mass of the weight is smaller than that of the vehicle.

The riding portion movement mechanism is effective for the slow and large fluctuation in the low frequency region in a similar manner to the vehicle body tilt mechanism, but the riding portion and the loading object is not tilted. Accordingly, the center-of-gravity position can be adjusted without the occupant changing an attitude.

The vertical load eccentricity modification amount $\Delta\beta^*$ is allocated in consideration of the characteristics described above.

First, the center-of-gravity position control system 23 removes a noise component included in data of the sensor or a super high frequency component having a small influence on a vehicle body motion from the vertical load eccentricity modification amount $\Delta\beta^*$.

That is, as shown in the following Formula 40, the super high frequency component is removed by applying the low-pass filter to the vertical load eccentricity modification amount $\Delta\beta^*$, and a substantial vertical load eccentricity modification amount $\Delta\beta_0^*$ which is actually used in the center-of-gravity position adjustment mechanism is obtained.

Note that the first filter shown in Formula 32 described above is used as the low-pass filter $F_{LPF}$, for example. A cutoff frequency $f_0$ thereof is set in advance based on the sampling period of the sensor or the natural frequency of a vehicle motion control.

Formula 40

Next, the center-of-gravity position control system 23 extracts a super high frequency component $\Delta\beta^*_B$ to be allocated to the weight movement mechanism from the obtained substantial vertical load eccentricity modification amount $\Delta\beta_0^*$.

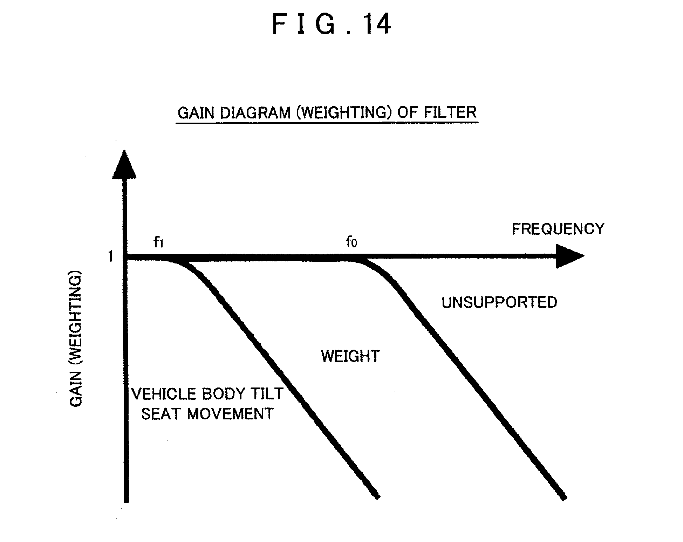

FIG. 14 shows a gain diagram (weighting) of the filter.

As shown in FIG. 14 or the following Formula 41, the substantial vertical load eccentricity modification amount $\Delta\beta_0^*$ is divided into a low frequency component $\Delta\beta^*_{Low}$ and a high frequency component $\Delta\beta^*_{High}$ by the low-pass filter $F_{LPF}$. Note that a cutoff frequency $f_1$ of the filter is set in advance based on the vehicle body tilt and a corresponding limit speed (natural frequency) of a riding portion movement control.

Formula 41

As shown in Formula 41, the obtained high frequency component $\Delta\beta^*_{High}$ of the substantial vertical load eccentricity modification amount is entirely an allocated amount $\Delta\beta^*_B$ of the weight movement mechanism.

Next, the center-of-gravity position control system 23 distributes the remaining low frequency component $\Delta\beta^*_{Low}$ of the substantial vertical load eccentricity modification amount to the riding portion movement mechanism and the vehicle body tilt mechanism in consideration of the lateral acceleration sensed by the occupant (applied to the loading object) at the time of a turn.

First, the center-of-gravity position control system 23 obtains a balanced tilt angle $\varphi_{eq}$ based on the lateral acceleration a of the vehicle.

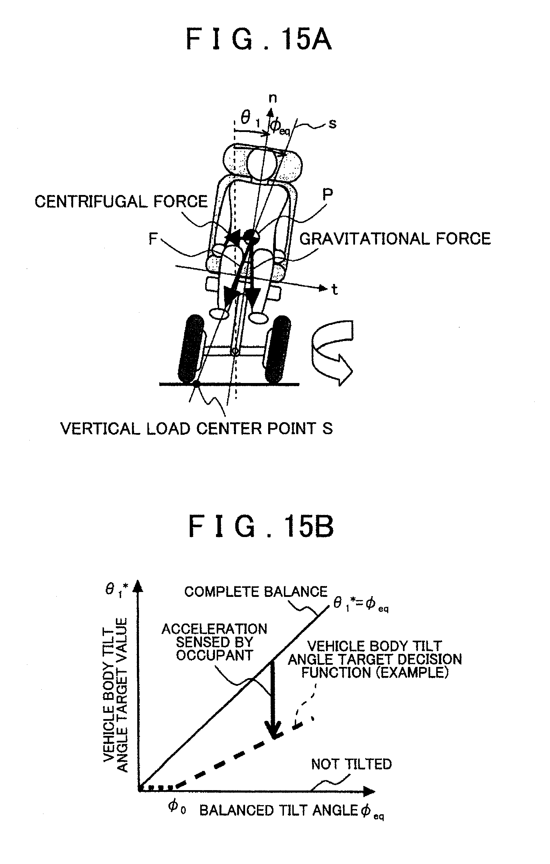

As shown in FIG. 15A, the balanced tilt angle $\varphi_{eq}$ represents an angle between a perpendicular axis and the resultant vector F of the centrifugal force and gravitational force. This angle is equivalent to a direction in which the force is applied to the occupant (loading object), and increases as the centrifugal force applied to the occupant (loading object) increases.

The balanced tilt angle $\varphi_{eq}$ is obtained by the following Formula 42.

In Formula 42, a represents the lateral acceleration, g represents the gravitational acceleration, $\Delta V$ represents a left-and-right wheel rotation circumferential speed difference, D represents the tread, $Y_G$ represents the substantial center-of-gravity displacement of the vehicle, $\lambda_H$ represents the basic center-of-gravity displacement of the occupant (loading object), $I_H$ represents the basic center-of-gravity distance of the occupant (loading object), $\theta_1$ represents the vehicle body tilt angle, and $\xi_{SL}$ represents the position of the riding portion.

Note that $a_H$ represents the lateral acceleration in the center-of-gravity position of the occupant (loading object). However, in the case where the measured value of the accelerometer is directly used (in the case of a slip), a correction of the acceleration is not performed, and $a_H = a$.

Formula 42

$$\Phi_{eq} = \tan^{-1}(a_H/g)$$

$$a_H = a - (\Delta V/D)^2(Y_{GH} - Y_G)$$

$$Y_{GH} = l_H \sin\theta_1 + (\lambda_H + \xi_{SL})\cos\theta_1$$

For reference sake, a lateral component (component in the direction perpendicular to the vehicle body symmetry plane) $a_{Ht}$ of the acceleration sensed by the occupant is shown by the following Formula 43.

As is clear from Formula 43, when tilting the vehicle body up to the balanced tilt angle, i.e., when $\theta_1 = \varphi_{eq}$, the occupant no longer senses a lateral force.

Formula 43

$$a_{Ht} = (\sqrt{(a^2 + g^2)})\sin(\varphi_{eq} - \theta_1)$$

Next, the center-of-gravity position control system 23 determines a target value $\theta_1{}^*$ of the vehicle body tilt angle based on the calculated balanced tilt angle $\varphi_{eq}$.

In Formula 43, the lateral acceleration $a_{Ht}$ sensed by the occupant (applied to the loading object) is determined by the balanced tilt angle $\varphi_{eq}$ (and the lateral acceleration a of the vehicle) corresponding to the magnitude of the centrifugal force applied to the occupant (loading object) and the vehicle body tilt angle $\theta_1$, equivalent to the tilt of the occupant (loading object).

Thus, by changing the vehicle body tilt angle $\theta_1$, the arbitrary lateral acceleration $a_{Ht}$ can be provided.

In the present embodiment, the target value $\theta_1{}^*$ of the vehicle body tilt angle is determined using FIG. 15B or the following Formula 44.

Accordingly, a reduction of load on the occupant due to a large centrifugal force and recognition of a turning state by the occupant sensing a part of the centrifugal force can both be achieved.

Formula 44

In Formula 44, $C_{SA}$ and $\varphi_0$ are parameters, for which values set in advance are used.

Herein, $C_{SA}$ is an acceleration change detection coefficient, and represents the ratio of an increases or decrease of a sensible acceleration with respect to an increase or decrease of the lateral acceleration.

Also, $\varphi_0$ is a deadband upper limit value. By using this value as a threshold value for the balanced tilt angle $\varphi_{eq}$, switching of a determination method of the vehicle body tilt angle target value $\theta_1{}^*$ according to the magnitude of the balanced tilt angle $\varphi_{eq}$ (lateral acceleration a) as described below is achieved.

(a) In the case where the balanced tilt angle $\varphi_{eq}$ is small, i.e., the centrifugal force is small ($|\varphi_{eq}| < |\varphi_0|$), the vehicle body is not tilted (the target tilt angle is shown as $\theta_1{}^* = 0$).

Accordingly, a small rocking behavior of the attitude or a field of view of the occupant can be prevented.

Also, energy necessary for tilting the vehicle body (riding portion 13) can be saved. Particularly, it is effective for a case where the vehicle body (riding portion 13) is tilted using a slide screw actuator.

(b) In the case where the balanced tilt angle $\varphi_{eq}$ is large, i.e., the centrifugal force is large ($|\varphi_{eq}| > |\varphi_0|$), the vehicle body is tilted to some degree.

Accordingly, the load on a body of the occupant due to the centrifugal force and mental anxiety of the occupant for an overturn of the vehicle body or a fall of oneself can be reduced.

By not tilting the vehicle body to the balanced tilt angle ($|\theta_1{}^*| < |\varphi_{eq}|$), the occupant can sense that the vehicle is in the turning state.

Further, by increasing a difference between the vehicle body tilt angle target value $\theta_1^*$ and the balanced tilt angle $\varphi_{eq}$ as the balanced tilt angle (centrifugal force) increases, i.e., providing a tilt ($C_{SA} > 0$) smaller than a tilt of a line where $\theta_1^* = \varphi_{eq}$ (having complete balance) in FIG, 15B, the occupant can sense the increase or decrease of the lateral acceleration.

Note that a vehicle body tilt angle target setting function shown in Formula 44 or FIG. 15B is an example of a case for use in the present embodiment, and other functions may also be used. For example, when $\theta_1^* = \varphi_{eq}$ (the complete balance is provided), driving is possible without causing any load of centrifugal force on the occupant.

The function may also be stored as a conversion table from the balanced tilt angle $\varphi_{eq}$ to the vehicle body tilt angle target value $\theta_1^*$ so that the vehicle body tilt angle target value $\theta_1^*$ is determined in accordance with the conversion table.

Further, the vehicle body tilt angle target setting function may be switched according to a preference of the occupant or the type of the loading object.

In the case of switching according to the preference of the occupant, a parameter change input device may be installed in the operating device 30 so that the parameter of the vehicle body tilt angle target setting function is changed continuously or discretely by an operation by the occupant, for example.

In the case of switching according to the type of the loading object, switching may be performed as follows based on an estimation result of the type of the loading object in step 13 (FIG. 7), for example.

    (a) If the loading object is a "human," Formula 44 or a function shown in FIG. 15B is used.

    (b) If the loading object is a "material object," the vehicle body is constantly tilted to the balanced tilt angle $\varphi_{eq}$ to prevent a roll or a fall of the material object.

    (c) If "none" of the objects is accommodated, the vehicle body is constantly not tilted to prevent a waste of energy.

Next, the center-of-gravity position control system 23 distributes the low frequency component $\Delta\beta_{Low}^*$ of the substantial vertical load eccentricity modification amount to the vehicle body tilt mechanism and the riding portion movement mechanism based on the determined target value $\theta_1^*$ of the vehicle body tilt angle.

A vehicle body tilt mechanism allocated amount $\Delta\beta_{CL}^*$ and a riding portion movement mechanism allocated amount $\Delta\beta_{SL}^*$ of the substantial vertical load eccentricity modification amount are respectively determined by Formula 45 and Formula 46.

Accordingly, security with respect to a vehicle body overturn provided by the vertical load eccentricity modification amount $\Delta\beta_{Low}^*$ and riding comfortableness of the occupant provided by the vehicle body tilt angle target value $\theta_1^*$ can both be ensured.

In Formulas 45 and 46, a represents the lateral acceleration, g represents the gravitational acceleration, D represents the tread, $R_w$ represents the tire contact radius, 1 represents the basic center-of-gravity distance of the vehicle, and $\lambda$ represents the basic center-of-gravity displacement of the vehicle.

Formula 45

$$\text{Formula 46}$$
$$\Delta\beta_{SL}^* = \Delta\beta_{Low}^* - \Delta\beta_{CL}^*$$

Finally, the center-of-gravity position control system 23 performs a preventing process of an offset operation with respect to the vehicle body tilt mechanism allocated amount $\Delta\beta_{CL}^*$ and the riding portion movement mechanism allocated amount $\Delta\beta_{SL}^*$ of the substantial vertical load eccentricity modification amount.

Accordingly, an unnecessary offset operation (operation of offsetting the effects of each other) of the two mechanisms, particularly movement of the riding portion such that the vertical load center point departs from the most stable position, can be prevented.

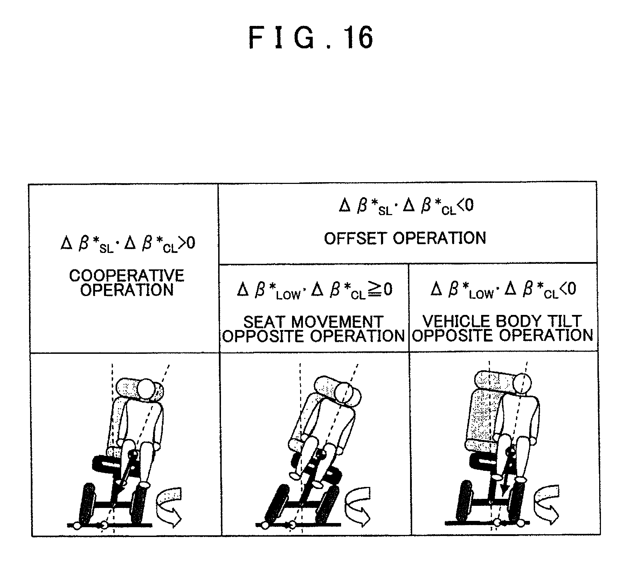

FIG. 16 shows a cooperative operation and the offset operation by a low frequency center-of-gravity position adjustment mechanism.

The set values $\Delta\beta_{CL}^*$ and $\Delta\beta_{SL}^*$ of the allocated amounts of the respective mechanisms are modified only in the case where an unnecessary operation is performed in light of such respective conditions.

    (a) In the case where $A\beta_{CL}^* \cdot \Delta\beta_{SL}^* > 0$, the two mechanisms operate (perform the cooperative operation) to move the center of gravity (vertical load center point) in the same direction. In this case, the allocated amounts $\Delta\beta_{CL}^*$ and $\Delta\beta_{SL}^*$ of the two mechanisms both do not need to be modified.

    (b) In the case where $\Delta\beta_{CL}^* \cdot \Delta\beta_{SL}^* < 0$, the two mechanisms operate (perform the offset operation) to move the center of gravity (vertical load center point) in opposite directions. This condition is further divided into the following two conditions.

(b1) In the case where $\Delta\beta_{Low}{}^* \cdot \Delta\beta_{CL}{}^* > 0$, the vehicle body tilt mechanism operates in the same direction as a direction of a target center-of-gravity movement for the entire system, but the riding portion movement mechanism operates in the opposite direction. Since this operation is meaningless, the allocated amount of the riding portion movement mechanism is modified as $\Delta\beta_{SL}{}^* = 0$ to prevent the opposite operation of the riding portion. Note that the allocated amount $\Delta\beta_{CL}{}^*$ of the vehicle body tilt mechanism does not need to be modified.

(b2) In the case where $\Delta\beta_{Low}{}^* \cdot \Delta\beta_{CL}{}^* < 0$, the vehicle body tilt mechanism operates in the opposite direction from the direction of the target center-of-gravity movement for the entire system. This operation is pointless regarding the center-of-gravity movement, but contributes to the riding comfortableness of the occupant. Thus, in this case, the allocated amounts $\Delta\beta_{CL}{}^*$ and $\Delta\beta_{SL}{}^*$ of the two mechanisms are both not modified. Note that, in the case where a reduction in energy consumption caused by the operation of each mechanism is prioritized over an improvement in riding comfortableness of the occupant, the vehicle body is not tilted, i.e., it may be modified as $\Delta\beta_{CL}{}^* = 0$.

After the allocated amounts of the substantial vertical load eccentricity modification amount for the respective mechanisms of the vehicle body tilt mechanism, the weight movement mechanism, and the riding portion movement mechanism have been determined, the center-of-gravity position control system 23 moves the respective mechanisms according to the allocated amounts, and causes the center-of-gravity position to move, thereby performing modification of the allocated amounts (steps 19 to 21).

The center-of-gravity position control system 23 adjusts the center-of-gravity position by tilting the vehicle body to the target tilt angle $\theta_1{}^*$ using the vehicle body tilt mechanism (step 19).

The vehicle body tilt angle target value $\theta_1{}^*$ is determined by the following Formula 47 based on the allocated amount $\Delta\beta_{CL}{}^*$ of the substantial vertical load eccentricity modification amount distributed to the vehicle body tilt mechanism in step 18.

In Formula 47, a is the lateral acceleration, g is the gravitational acceleration, $R_W$ is the tire contact radius, D is the tread, 1 is the basic center-of-gravity distance of the vehicle, and λ s the basic center-of-gravity displacement of the vehicle.

Formula 47

Note that the vehicle body tilt angle target value $\theta_1{}^*$ is already obtained with Formula 44 in step 18, and the previously obtained value may be used directly if there is no modification for $\Delta\beta_{CL}{}^*$ from that point.

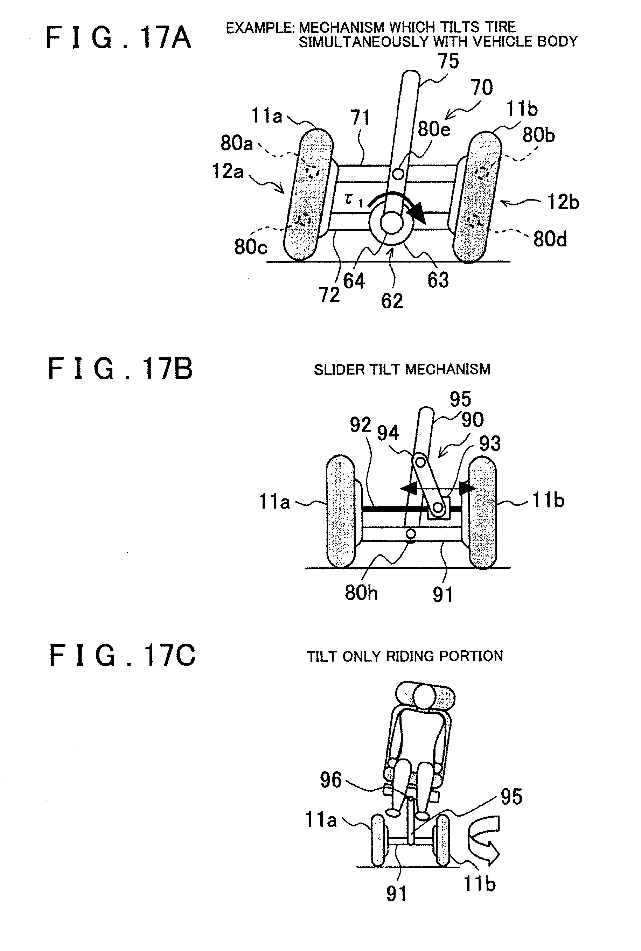

FIG. 17 shows configuration examples of the vehicle body tilt mechanism which tilts the vehicle body to the target angle $\theta_1{}^*$.

The vehicle body tilt mechanism functions as riding portion tilting means, and causes the center of gravity of the vehicle to move by tilting a part of the vehicle body including the riding portion 13 in the lateral direction. This mechanism is suitable for causing the center of gravity to move slowly and largely since the mass (inertia) of the movable portion is large. It is also possible to adjust the degree of centrifugal force sensed by the occupant by using the fact that the riding portion and the occupant also tilt together with the vehicle body.

The vehicle body tilt mechanism of FIG. 17A includes a link mechanism 70 provided to the drive wheels 11 a and 11b.

The link mechanism 70 includes an upper portion link 71 and a lower portion link 72, and both ends of the two links 71 and 72 are respectively shaft-supported by support shafts 80a to 80d of the drive wheels 11a and 11b.

Note that drive motors 12a and 12b are attached with a supporting member for supporting the support shafts 80a to 80d by welding or the like.

In this manner, the link mechanism 70 is configured as a four link mechanism in a parallelogram with the upper portion link 71 and the lower portion link 72 respectively as the upper side and the lower side and the drive motor 12a and the drive motor 12b as two lateral sides.

A support shaft 80e is provided in the center of the upper portion link 71, and a stator 63 of the tilt motor (vehicle body tilt actuator) 62 is arranged in the center of the lower portion link 72.

On a lower side end portion of a connection link 75 arranged in an upper portion of the riding portion 13, a rotor 64 of the tilt motor 62 is fixed, and the support shaft 80e of the upper portion link 71 is fixed in the middle of the connection link 75.

In the link mechanism 70 configured in this manner, driving the tilt motor 62 causes deformation of the parallelogram of the link mechanism 70 such that the riding portion 13 is tilted along with the tilt of the connection link 75.

The vehicle body tilt mechanism shown in FIG. 17B is a mechanism which tilts the riding portion 13 using a slider mechanism 90. In this mechanism, the drive wheels 11a and 11b are not tilted regardless of the tilt of the riding portion 13.

A fixed shaft 91 and a slider shaft 92 are fixed to the two drive wheels 11 a and 11b. A lower side end portion of a riding portion support shaft 95 of which an upper end portion is provided with the riding portion 13 is shaft-supported by a support shaft 80h in the center of the fixed shaft 91.

A slider 93 which is capable of a reciprocating motion in the horizontal direction along the slider shaft 92 is arranged in the slider shaft 92. The slider 93 and the riding portion support shaft 95 are connected by a connection shaft 94.

By the movement of the slider 93, the riding portion support shaft 95 and the riding portion 13 are tilted with the support shaft 80h as a fulcrum.

In the vehicle body tilt mechanism shown in FIG. 17C, a portion formed of the two drive wheels 11a and 11 b, the fixed shaft 91 fixed to the two drive wheels 11a and 11b, and the riding portion support shaft 95 having a lower side end portion fixed to the fixed shaft 91 is not tilted, but the riding portion 13 arranged in the upper end portion of the riding portion support shaft 95 is tilted by driving a tilt motor 96.

In this manner, the vehicle body is tilted to an arbitrary angle by the mechanism which tilts the vehicle body with one point on the center axis of the vehicle body as a center, the actuator which provides a torque $\tau 1$ around the center axis, and a sensor which measures the tilt angle of the vehicle body.

At this time, a displacement of the vertical load center point at the balanced tilt angle can be eliminated by causing the height of the pivot center to coincide with the axle and tilting the tire in accordance with the tilt of the vehicle body.

In the case where the tire is not tilted, the displacement of the vertical load center point at the balanced tilt angle can be reduced by bringing the pivot center closer to the ground.

Note that the vehicle body tilt mechanism may use other various mechanisms and drive forces. For example, a cam mechanism, a ball screw, an expansion device such as a hydraulic cylinder, or the like may be used to tilt the riding portion 13.

Simultaneously with the operation of the vehicle body tilt mechanism, the center-of-gravity position control system 23 adjusts the center-of-gravity position by moving the weight 134 to a target position $\xi_B{}^*$ using the weight movement mechanism (step 20).

The target position $\xi_B{}^*$ of the weight 134 is determined by the following Formula 48 based on the allocated amount $\Delta\beta^*{}_B$ of the vertical load eccentricity modification amount distributed to the weight movement mechanism in step 18.

In Formula 48, $\theta_1$ is the vehicle body tilt angle, a is the lateral acceleration, g is the gravitational acceleration, D is the tread, m is the mass of the vehicle, and $m_B$ is the mass of the weight.

Formula 48

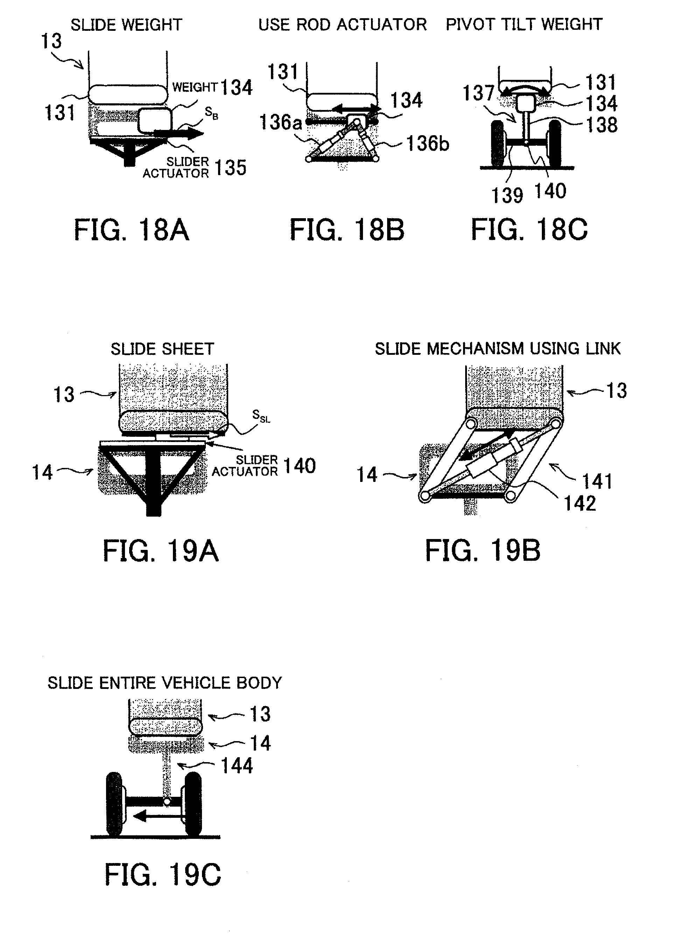

FIG. 18 shows configuration examples of the weight movement mechanism which moves the weight 134 to the target position $\xi_B{}^*$.

The weight movement mechanism functions as weight moving means, and causes the center of gravity of the vehicle to move by moving the weight in the lateral direction. This mechanism is suitable for causing the center of gravity to move fast and little since the mass (inertia) of the movable portion is small.

The weight movement mechanism is configured to move the weight 134 arranged in the lower portion of the seat portion 131 of the riding portion 13 in the lateral direction (direction perpendicular to the vehicle body symmetry plane).

The weight movement mechanism of FIG. 18A of the present embodiment moves the weight 134 in parallel on a slider using a slider actuator 135.

In the weight movement mechanism shown in FIG. 18B, one of two expansion actuators 136a and 136b is expanded while the other is contracted to move the weight 134 in parallel.

The weight movement mechanism shown in FIG. 18C is a mechanism using a pivot tilt weight. The weight 134 is arranged on an upper end portion of a support shaft 138, and a rotor of a motor 140 arranged in the center of a drive wheel shaft 139 is fixed to a lower end portion of the support shaft 138. With the motor 140, the weight 134 is moved on a circumference with the support shaft 138 as a radius.

In this manner, a balancer is moved to an arbitrary position by the weight movable in the direction perpendicular to the vehicle body symmetry plane, the actuator which provides the drive force to the weight, and the sensor which detects the position of the weight.

Note that an excessive increase in weight caused by providing this mechanism can be eliminated by using as the weight 134 a weight object (battery, ECU, or the like) originally mounted on the vehicle body.

By increasing the arrangement height of the weight 134, an effect of a counter action on a vehicle body tilt motion caused by the weight movement (acceleration/deceleration) increases. This can also be used for the attitude control.

Simultaneously with the operations of the vehicle body tilt mechanism and the weight movement mechanism, the center-of-gravity position control system 23 adjusts the center-of-gravity position by moving the riding portion 13 to a target position $\xi_{SL}{}^*$ using the riding portion movement mechanism (step 21)

The target position $\xi_{SL}{}^*$ of the riding portion 13 is determined by the following Formula 49 based on the substantial vertical load eccentricity modification amount $\Delta\beta_{SL}{}^*$ distributed to the riding portion movement mechanism in step 18.

In Formula 49, $\theta_1$ is the vehicle body tilt angle, a is the lateral acceleration of the vehicle, g is the gravitational acceleration, D is the tread, m is the mass of the vehicle, and $m_{SL}$, is the mass of the riding portion.

Formula 49

FIG. 19 shows configuration examples of the riding portion movement mechanism which moves the riding portion 13 to the target position $\xi_{SL}{}^*$.

The riding portion movement mechanism functions as riding portion moving means, and causes the center of gravity of the vehicle to move by moving the riding portion in the lateral direction. This mechanism is suitable for slowly and largely moving the center of gravity since the mass (inertia) of the movable portion is large. In the center-of-gravity movement, the riding portion and the occupant do not need to be tilted.

The riding portion movement mechanism is configured to move the riding portion 13 in the lateral direction.

In the riding portion movement mechanism of FIG. 19A of the present embodiment, the riding portion 13 is moved to the left and right on a slider using a slider actuator 140.

In the riding portion movement mechanism of FIG. 19B, a parallelogram link 141 and an expansion actuator 142 on a diagonal line thereof are arranged, and the expansion or contraction thereof causes the parallelogram link to deform, thereby causing the riding portion 13 to slide.

In the riding portion movement mechanism of FIG. 19C, the supporting member (undercarriage) 14 is moved in parallel with a drive wheel shaft.

In this manner, the riding portion is moved to an arbitrary position by the riding portion movable in the direction perpendicular to the vehicle body symmetry plane, the actuator which provides the drive force to the riding portion, and the sensor which detects the position of the riding portion.

Note that, by bringing the height of a slider portion closer to the axle, the effect of the counter action on the vehicle body tilt motion caused by the movement (acceleration/deceleration) of the riding portion can be reduced.

Using the respective center-of-gravity position adjustment mechanisms (the vehicle body tilt mechanism, the weight movement mechanism, and the riding portion movement mechanism) described above, the center-of-gravity position control system 23 performs control such that the actual vehicle body tilt angle $\theta_1$, weight position $\xi_B$, and riding portion position $\xi_{SL}$ coincide with the targeted vehicle body tilt angle $\theta_1{}^*$, weight position $\xi_B{}^*$, and riding portion position $\xi_{SL}{}^*$.

In the present embodiment, the center-of-gravity position control is provided by a state feedback control for all of the center-of-gravity position adjustment mechanisms.

At this time, the input $u(\rightarrow)$ (the vehicle body tilt actuator output $\tau_1$, the weight movement actuator output $S_B$, or the riding portion movement actuator output $S_{SL}$) provided from each actuator is shown by the following Formula 50.

Components of the state amount $x(\rightarrow)$, a target state amount $x(\rightarrow^*)$, and a reference input $u(\rightarrow^*)$ in Formula 50 are as shown in Formula 51.

Formula 50

Formula 51

In Formula 50, K is a feedback matrix which is set in advance by, for example, a gain setting method of an optimum regulator in consideration of the convergence time and stability.

Note that change speeds $\theta_1{}^*(\cdot)$, $\xi_B{}^*(\cdot)$, $\xi_{SL}(\cdot)$ of the respective target values in the target state amount $x(\rightarrow^*)$ of Formula 51 can be obtained by differences in the respective target values, but may be shown as $\theta_1{}^*(\cdot) = \xi_B{}^*(\cdot) = \xi_{SL}{}^* (\cdot) = 0$, ignoring the change speeds.

Respective components of the reference input $u(\rightarrow^*)$ show in Formula 51 are obtained from the following Formula 52.

In Formula 52, a represents the lateral acceleration, g represents the gravitational acceleration, $m_1$ represents the mass of the vehicle body tilt portion, $m_B$ represents the mass of the weight, $m_{SL}$ represents the mass of the riding portion, $m_H$ represents the mass of the loading object, and $\lambda_H$ epresents the center-of-gravity displacement of the loading object.

Formula 52

In the embodiment described above, an example of a turning limit improvement control for a one-axis two-wheeled vehicle has been described. However, according to the present invention, a method of the turning limit improvement control of the present embodiment may also be applied to a vehicle having three or more wheels.

Formula 13

$$\vec{x} = \begin{bmatrix} \vec{x}_s \\ \dot{\vec{x}}_s \end{bmatrix} \ , \qquad A = \begin{bmatrix} 0 & I \\ -M_s^{-1}K_s & -M_s^{-1}C_s \end{bmatrix} \ ,$$

$$B = \begin{bmatrix} 0 \\ M_s^{-1}P_u \end{bmatrix} \ , \quad C = I \ , \quad D = \begin{bmatrix} 0 \\ M_s^{-1}P_d \end{bmatrix}$$

Formula 14

$$\mathbf{M}_s \ddot{\vec{x}}_s + \mathbf{C}_s \dot{\vec{x}}_s + \mathbf{K}_s \vec{x}_s = \mathbf{P}_u \vec{u} + \mathbf{P}_d \vec{d}$$

Formula 15

$$\vec{x}_s = \begin{bmatrix} \theta_1 \\ \xi_B \\ \xi_{SL} \end{bmatrix} \quad , \qquad \vec{u} = \begin{bmatrix} \tau_1 \\ S_B \\ S_{SL} \end{bmatrix} \quad , \qquad \mathbf{P}_u = \mathbf{I}$$

Formula 16

$$\mathbf{M}_s = \begin{bmatrix} J_1^{(n)} & m_B \ell_B & m_{SL}^{(n)} \ell_{SL}^{(n)} \\ m_B \ell_B & m_B & 0 \\ m_{SL}^{(n)} \ell_{SL}^{(n)} & 0 & m_{SL}^{(n)} \end{bmatrix} \quad , \quad \mathbf{C}_s = \begin{bmatrix} D_1 & 0 & 0 \\ 0 & D_B & 0 \\ 0 & 0 & D_{SL} \end{bmatrix} \quad ,$$

$$\mathbf{K}_s = \begin{bmatrix} -m_1^{(n)} \ell_1^{(n)} g & -m_B g & -m_{SL}^{(n)} g \\ -m_B g & 0 & 0 \\ -m_{SL}^{(n)} g & 0 & 0 \end{bmatrix}$$

Formula 17

$$\vec{d} = \vec{d}_a + \vec{d}_\lambda + \vec{d}_\Delta$$

$$\vec{d}_a = -a \begin{bmatrix} m_1 \ell_1 \\ m_B \\ m_{SL} \end{bmatrix}$$

$$\vec{d}_\lambda = \begin{bmatrix} m_H \lambda_H g \\ 0 \\ 0 \end{bmatrix}$$

$$\vec{d}_\Delta = -\begin{bmatrix} \Delta(J_H) & \Delta(m_H \ell_H) & -g\Delta(m_H \ell_H) & -g\Delta(m_H) \\ 0 & 0 & 0 & 0 \\ \Delta(m_H \ell_H) & \Delta(m_H) & -g\Delta(m_H) & 0 \end{bmatrix} \begin{bmatrix} \ddot{\theta}_1 \\ \ddot{\xi}_{SL} \\ \theta_1 \\ \xi_{SL} \end{bmatrix}$$

Formula18

$$\dot{\vec{x}} = \mathbf{A}\vec{x} + \mathbf{B}\vec{u} + \mathbf{D}\vec{d} \quad , \quad \vec{y} = \mathbf{C}\vec{x}$$

Formula19

$$W_2 = \left(\frac{1}{g}\right)^2 \sum_{k=1}^{N} \left\{a^{(k)} - \overline{a}\right\}^2$$

$$W_3 = \left(\frac{\ell_1}{g}\right)^2 \sum_{k=1}^{N} \left\{\ddot{\theta}_1^{(k)} - \overline{\ddot{\theta}_1}\right\}^2$$

$$W_4 = \left(\frac{1}{g}\right)^2 \sum_{k=1}^{N} \left\{\ddot{\xi}_{SL}^{(k)} - \overline{\ddot{\xi}_{SL}}\right\}^2$$

$$W_5 = \sum_{k=1}^{N} \left\{\theta_1^{(k)} - \overline{\theta_1}\right\}^2$$

$$W_6 = \left(\frac{1}{\ell_1}\right)^2 \sum_{k=1}^{N} \left\{\xi_{SL}^{(k)} - \overline{\xi_{SL}}\right\}^2$$

Formula20

$$\vec{x} = \begin{bmatrix} \vec{x}_S \\ \dot{\vec{x}}_S \end{bmatrix} \quad , \quad \mathbf{A} = \begin{bmatrix} 0 & \mathbf{I} \\ -\mathbf{M}_S^{-1}\mathbf{K}_S & -\mathbf{M}_S^{-1}\mathbf{C}_S \end{bmatrix} \quad ,$$

$$\mathbf{B} = \begin{bmatrix} 0 \\ \mathbf{M}_S^{-1}\mathbf{P}_u \end{bmatrix} \quad , \quad \mathbf{C} = \mathbf{I} \quad , \quad \mathbf{D} = \begin{bmatrix} 0 \\ \mathbf{M}_S^{-1}\mathbf{P}_d \end{bmatrix}$$

Formula21

$$\hat{\vec{d}}^{(k)} = \vec{z}^{(k)} + \mathbf{L}\vec{x}^{(k)}$$

$$\vec{z}^{(k)} = \vec{z}^{(k-1)} - \Delta t \, \vec{q}^{(k)}$$

$$\vec{q}^{(k)} = \mathbf{L}\left\{\mathbf{D}\vec{z}^{(k-1)} + (\mathbf{A} + \mathbf{D}\mathbf{L})\vec{x}^{(k)} + \mathbf{B}\vec{u}^{(k)}\right\}$$

Formula22

$$\vec{d} = -\Lambda \vec{\eta}$$

$$\Lambda = -\begin{bmatrix} -m_H \lambda_H g & m_1 \ell_1 & \Delta(J_H) & \Delta(m_H \ell_H) & -g\Delta(m_H \ell_H) & -g\Delta(m_H) \\ 0 & m_B & 0 & 0 & 0 & 0 \\ 0 & m_{SL} & \Delta(m_H \ell_H) & \Delta(m_H) & -g\Delta(m_H) & 0 \end{bmatrix}$$

$$\vec{\eta} = \begin{bmatrix} 1 \\ a \\ \ddot{\theta}_1 \\ \ddot{\xi}_{SL} \\ \theta_1 \\ \xi_{SL} \end{bmatrix}$$

Formula23

$$\Lambda^T = -\left\{ \sum_{k=1}^N (\vec{\eta}^{(k)} \vec{\eta}^{(k)}) \right\}^{-1} \left\{ \sum_{k=1}^N (\vec{\eta}^{(k)} \hat{\vec{d}}^{(k)}) \right\}$$

Formula24

$$\Delta(m_H) = \frac{W_2 \Delta(m_H)_2 + W_4 \Delta(m_H)_4 + W_5 \Delta(m_H)_5 + W_6 \Delta(m_H)_6}{W_2 + W_4 + W_5 + W_6}$$

$$\Delta(m_H)_2 = \Lambda_{32} - m_{SL}^{(n)}, \quad \Delta(m_H)_4 = \Lambda_{34}, \quad \Delta(m_H)_5 = -\frac{1}{g}\Lambda_{35}, \quad \Delta(m_H)_6 = -\frac{1}{g}\Lambda_{16}$$

Formula25

$$\Delta(m_H \ell_H) = \frac{W_2 \Delta(m_H \ell_H)_2 + W_3 \Delta(m_H \ell_H)_3 + W_4 \Delta(m_H \ell_H)_4 + W_5 \Delta(m_H \ell_H)_5}{W_2 + W_3 + W_4 + W_5}$$

$$\Delta(m_H \ell_H)_2 = \Lambda_{12} - m_1^{(n)} \ell_1^{(n)}, \quad \Delta(m_H \ell_H)_3 = \Lambda_{33}, \quad \Delta(m_H \ell_H)_4 = \Lambda_{14}, \quad \Delta(m_H \ell_H)_5 = -\frac{1}{g}\Lambda_{15}$$

Formula26

$$p_{Low[1]} = F_{LPF}[p_{[1]}^{(k)}; f_2], \quad p_{Low[2]} = F_{LPF}[p_{[2]}^{(k)}; f_2]$$

Formula27

$$m_H = m_H^{(n)} + \Delta m_H$$

$$h_H = h_H^{(n)} + \frac{\Delta(m_H \ell_H)}{m_H}$$

$$\lambda_H = -\frac{1}{m_H g} \Lambda_{11}$$

Formula28

$$W_{act} < W_0$$

$$W_{act} = W_2 + W_3 + W_4 + W_5 + W_6$$

$$= \left(\frac{1}{g}\right)^2 \sum_{k=1}^{N} \{a^{(k)} - \bar{a}\}^2 + \left(\frac{\ell_1}{g}\right)^2 \sum_{k=1}^{N} \{\ddot{\theta}_1^{(k)} - \bar{\bar{\theta}}_1\}^2$$

$$+ \left(\frac{1}{g}\right)^2 \sum_{k=1}^{N} \{\ddot{\xi}_{SL}^{(k)} - \bar{\bar{\xi}}_{SL}\}^2 + \sum_{k=1}^{N} \{\theta_1^{(k)} - \bar{\theta}_1\}^2 + \left(\frac{1}{\ell_1}\right)^2 \sum_{k=1}^{N} \{\xi_{SL}^{(k)} - \bar{\xi}_{SL}\}^2$$

Formula29

$$| p_{[1]}^{(k)} - p_{[1]}^{(k-1)} | > \Delta p_{[1]max}$$

$$\sum_{k=1}^{N} | p_{[1]}^{(k)} - p_{[1]}^{(k-1)} | = 0$$

Formula30

$$p_{High} = F_{LPF}[p_{[1]}^{(k)}; f_1] - F_{LPF}[p_{[1]}^{(k)}; f_2]$$

Formula31

$$m_H = \omega_{m[1]} m_{H,Low[1]} + \omega_{m[2]} m_{H,Low[2]} + m_{H,High} \quad (\omega_{m[1]} + \omega_{m[2]} = 1)$$

$$\lambda_H = \omega_{\lambda[1]} \lambda_{H,Low[1]} + \omega_{\lambda[2]} \lambda_{H,Low[2]} + \lambda_{H,High} \quad (\omega_{\lambda[1]} + \omega_{\lambda[2]} = 1)$$

$$h_H = \omega_{h[1]} h_{H,Low[1]} + \omega_{h[2]} h_{H,Low[2]} + h_{H,High} \quad (\omega_{h[1]} + \omega_{h[2]} = 1)$$

Formula32

$$p_{Low[1]} = F_{LPF}[p_{[1]}^{(k)}; f_2], \quad p_{Low[2]} = F_{LPF}[p_{[2]}^{(k)}; f_2]$$

Formula33

$$\widetilde{x}^{(k)} = F_{LPF}[x^{(k)}; f_c] = \frac{1}{1+\tau}\left\{\widetilde{x}^{(k-1)} + \tau x^{(k)}\right\}$$

$$\tau = 2\pi f_c T_s$$

Formula37

$$\Delta\beta_{Low}^{\bullet} = F_{LPF}[\Delta\beta_0^{\bullet}; f_1]$$

$$\Delta\beta_{High}^{\bullet} = \Delta\beta_0^{\bullet} - \Delta\beta_{Low}^{\bullet} = \Delta\beta_B^{\bullet}$$

Formula38

$$\beta_{slip} = 1 - \frac{1}{\sqrt{1 - \left(\dfrac{a_{BC}}{\mu g}\right)^2}} \frac{|\tau_{W\bullet}|}{\dfrac{1}{2}\mu m g R_W}$$

Formula40

$$\Delta\beta^* = \beta^* - \beta$$

$$\beta^* = \begin{cases} -\beta_{safe} & (\beta < -\beta_{safe}) \\ \beta & (-\beta_{safe} \leqq \beta \leqq \beta_{safe}) \\ \beta_{safe} & (\beta > \beta_{safe}) \end{cases}$$

Formula41

$$\Delta\dot{\beta}_0 = F_{LPF}\lfloor\Delta\beta^*; f_0\rfloor$$

Formula44

$$\vec{u} = \vec{u}^* + \mathbf{K}(\vec{x} - \vec{x}^*)$$

Formula45

$$\theta_1^* = \begin{cases} (1 - C_{SA})(\phi_{eq} + \phi_0) & (\phi_{eq} < -\phi_0) \\ 0 & (-\phi_0 \leq \phi_{eq} \leq \phi_0) \\ (1 - C_{SA})(\phi_{eq} - \phi_0) & (\phi_{eq} > \phi_0) \end{cases}$$

Formula47

$$\Delta\dot{\beta}_{CL} = \frac{\Delta\dot{\lambda}_{GF,CL}}{D/2}$$

$$\Delta\dot{\lambda}_{GF,CL} = (\ell + R_W)\left\{\sin\theta_1^* + \frac{a}{g}(1 - \cos\theta_1^*)\right\} + \lambda\left\{\frac{a}{g}\sin\theta_1^* - (1 - \cos\theta_1^*)\right\}$$

Formula48

$$\theta_1^* = \sin^{-1}\left(\frac{\Delta\lambda_{GF,CL}^* + \lambda_{HA}}{\ell_{HA}}\right) - \sin^{-1}\left(\frac{\lambda_{HA}}{\ell_{HA}}\right)$$

$$\lambda_{HA} = \lambda - \tilde{a}(\ell + R_W)$$

$$\ell_{HA} = \sqrt{\{(\ell + R_W)^2 + \lambda^2\}\{1 + \tilde{a}^2\}}$$

$$\Delta\lambda_{GF,CL}^* = \frac{D}{2}\Delta\beta_{CL}^* \quad , \quad \tilde{a} = \frac{a}{g}$$

Formula49

$$\xi_B^* = \frac{m}{m_B}\frac{\Delta\lambda_{GF,B}^*}{\cos\theta_1 + \tilde{a}\sin\theta_1}$$

$$\Delta\lambda_{GF,B}^* = \frac{D}{2}\Delta\beta_B^* \quad , \quad \tilde{a} = \frac{a}{g}$$

Formula50

$$\xi_B^* = \frac{m}{m_B}\frac{\Delta\lambda_{GF,B}^*}{\cos\theta_1 + \tilde{a}\sin\theta_1}$$

$$\Delta\lambda_{GF,B}^* = \frac{D}{2}\Delta\beta_B^* \quad , \quad \tilde{a} = \frac{a}{g}$$

Formula51

$$\tau_1^* = -m_1\tilde{g}\{\ell_1\sin(\theta_1^* - \phi) + \lambda_1^*\cos(\theta_1^* - \phi)\}$$

$$S_B^* = -m_B\tilde{g}\sin(\theta_1^* - \phi)$$

$$S_{SL}^* = -m_{SL}\tilde{g}\sin(\theta_1^* - \phi)$$

$$\tilde{g} = \sqrt{g^2 + a^2}$$

$$\phi = \tan^{-1}\left(\frac{a}{g}\right)$$

$$\lambda_1^* = \frac{m_B\xi_B^* + m_{SL}\xi_{SL}^* + m_H\lambda_H}{m_1}$$

Formula52

$$\vec{u} = \begin{bmatrix} \tau_1 \\ S_B \\ S_{SL} \end{bmatrix} \qquad \bar{x} = \begin{bmatrix} \theta_1 \\ \xi_B \\ \xi_{SL} \\ \dot{\theta}_1 \\ \dot{\xi}_B \\ \dot{\xi}_{SL} \end{bmatrix} \qquad \vec{x}^{\bullet} = \begin{bmatrix} \theta_1^{\bullet} \\ \xi_B^{\bullet} \\ \xi_{SL}^{\bullet} \\ \dot{\theta}_1^{\bullet} \\ \dot{\xi}_B^{\bullet} \\ \dot{\xi}_{SL}^{\bullet} \end{bmatrix}$$

$$\vec{u}^{\bullet} = \begin{bmatrix} \tau_1^{\bullet} \\ S_B^{\bullet} \\ S_{SL}^{\bullet} \end{bmatrix}$$

**Claims**

1.  A vehicle including two drive wheels arranged to oppose each other, **characterized by** comprising:

    a riding portion for accommodating a weight body;
    center-of-gravity position acquisition means for acquiring a center-of-gravity position;
    lateral acceleration acquisition means for acquiring a lateral acceleration which is an acceleration component in a horizontal direction with respect to an axle;
    movement amount determination means for determining a movement amount of the center-of-gravity position in a left-right direction in accordance with a magnitude of the acquired center-of-gravity position and lateral acceleration; and
    center-of-gravity movement means for causing the center-of-gravity position to move in accordance with the determined movement amount of the center-of-gravity position.

2.  The vehicle according to claim 1, **characterized by** further comprising:

    rotation speed acquisition means for acquiring a rotation speed of each of the two drive wheels, wherein
    the lateral acceleration acquisition means calculates the lateral acceleration using each of the acquired rotation speeds of the two drive wheels.

3.  The vehicle according to claim 1, **characterized by** further comprising:

    an accelerometer arranged in the vehicle, wherein
    the lateral acceleration acquisition means calculates the lateral acceleration using a measured value of the accelerometer.

4.  The vehicle according to any one of claims 1 to 3, **characterized by** further comprising:

    a load sensor arranged in the riding portion; and
    a height sensor which measures a height of the weight body, wherein
    the center-of-gravity position acquisition means acquires the center-of-gravity position from detected values of the load sensor and the height sensor.

5.  The vehicle according to any one of claims 1 to 3, **characterized in that**
    the center-of-gravity position acquisition means acquires the center-of-gravity position using a disturbance observer.

6.  The vehicle according to any one of claims 1 to 3, **characterized by** further comprising:

    a load sensor arranged in the riding portion;
    a height sensor which measures a height of the weight body;
    direct acquisition means for acquiring the center-of-gravity position from detected values of the load sensor and the height sensor; and

indirect acquisition means for acquiring the center-of-gravity position using a disturbance observer, wherein the center-of-gravity position acquisition means acquires the center-of-gravity position based on acquired values of the direct acquisition means and the indirect acquisition means.

7. The vehicle according to any one of claims 1 to 6, **characterized in that** the center-of-gravity movement means comprises at least one of:

   vehicle body tilting means for tilting a vehicle body in the left-right direction;
   weight moving means for moving a weight in the left-right direction; and
   riding portion moving means for moving the riding portion in the left-right direction.

8. The vehicle according to claim 7, **characterized in that**
   the center-of-gravity movement means comprises two or more of the vehicle body tilting means, the weight moving means, and the riding portion moving means, and
   the movement amount determination means comprises distribution means for distributing the determined movement amount of the center of gravity to two or more of the vehicle body tilting means, the weight moving means, and the riding portion moving means included in the center-of-gravity movement means.

9. The vehicle according to claim 8, **characterized in that**
   the distribution means distributes the determined movement amount of the center of gravity based on a frequency component.

# F I G . 1

HEADREST 133

BACKREST PORTION 132

RIDING PORTION 13

OCCUPANT

OPERATING DEVICE 30

SEAT PORTION 131

(WEIGHT 134)

CONTROL UNIT 16

14

DRIVE MOTOR 12

DRIVE WHEEL 11a

121

DRIVE WHEEL 11b

# FIG.2

SEATING HEIGHT METER

LOAD METER

FIG.3A

FIG.3B

FIG.3C

TWISTING TORQUE MEASURING INSTRUMENT

FIG.3D

# FIG.4

```
           ┌─────────────────────────────┐
           │ TURNING LIMIT IMPROVEMENT   │
           │    CONTROL PROCESS          │
           └─────────────────────────────┘
                        │
      S11               │
      ┌─────────────────────────────────────────────┐
      │ MEASURE LATERAL ACCELERATION USING EACH      │
      │ WHEEL ROTATION METER OR ACCELEROMETER        │
      └─────────────────────────────────────────────┘
```

S12
MEASURE SEATED POSITION,
BODY WEIGHT,
OR BODY TYPE OF
OCCUPANT USING
MEASURING INSTRUMENT

S14
ESTIMATE DISTURBANCE
APPLIED TO VEHICLE BODY
FROM HISTORY OF
CENTER-OF-GRAVITY
POSITION
MODIFICATION CONTROL

S13
ESTIMATE
CENTER-OF-GRAVITY
DISPLACEMENT AND HEIGHT
OF OCCUPANT FROM
OBTAINED DATA

S15
ESTIMATE
CENTER-OF-GRAVITY
DISPLACEMENT AND HEIGHT
OF OCCUPANT BASED
ON DISTURBANCE
ESTIMATION VALUE

S16
DETERMINE CENTER-OF-GRAVITY POSITION
OF VEHICLE BASED ON EACH ESTIMATE VALUE

S17
SET CENTER-OF-GRAVITY POSITION
MODIFICATION AMOUNT
BASED ON CENTER-OF-GRAVITY
POSITION AND LATERAL ACCELERATION

S18
ALLOCATE NECESSARY CENTER-OF-GRAVITY
POSITION MODIFICATION
AMOUNT TO EACH SYSTEM

S19
TILT VEHICLE BODY
TO ADJUST
CENTER-OF-GRAVITY
POSITION

S20
MOVE WEIGHT TO ADJUST
CENTER-OF-GRAVITY
POSITION

S21
MOVE SEAT TO ADJUST
CENTER-OF-GRAVITY
POSITION

```
           ┌─────────────────────────────┐
           │          RETURN             │
           └─────────────────────────────┘
```

37

# FIG.5A

# FIG.5B

# FIG.6

$\theta_1$
n

$\eta_{et}$

$\lambda_H$

MOMENT
REFERENCE AXIS

$\eta_H$

t

$Y^{(k)}$

# FIG.7

SEATING HEIGHT $\zeta_H$

| 0 | 0.1 | 0.2 | 0.3 | 0.4 | 0.5 [m] |

0.01m    0.3m

MASS $m_H$

| 0 | 2 | 4 | 6 | 8 | 10 [kg] |

0.2kg    8kg

RATIO MASS $m_H / \zeta_H$

| 10 | 20 | 30 | 40 [kg/m] |

30kg/m

"NONE" OF LOADING OBJECTS IS ACCOMMODATED

$h_H = 0$

LOADING OBJECT IS "MATERIAL OBJECT"

CENTER OF GRAVITY IS ASSUMED TO BE DISPLACED DOWNWARD

$h_H = \dfrac{1-\gamma}{2}\zeta_H$

◎ CENTER-OF-GRAVITY ECCENTRICITY $\gamma$

VALUE FOR ASSUMING DEGREE OF CENTER-OF-GRAVITY DISPLACEMENT

$\gamma = 0.4$ (EXAMPLE)

LOADING OBJECT IS "HUMAN"

ESTIMATION IS BASED ON STANDARD VALUE

$h_H = \dfrac{\zeta_H}{\zeta_{H,0}} h_{H,0}$

◎ HUMAN BODY STANDARD VALUE

$\zeta_{H,0} = 0.902$[m]

$h_{H,0} = 0.264$[m]

39

# F I G . 8

# F I G . 9

# FIG. 10A

MEASURING
INSTRUMENT
AND
OBSERVER

ONLY
MEASURING
INSTRUMENT

$f_2$          $f_1$     FREQUENCY

# FIG. 10B

| WEIGHTING (EXAMPLE) | MASS | CENTER-OF-GRAVITY DISPLACEMENT | CENTER-OF-GRAVITY HEIGHT |
|---|---|---|---|
| | $m_H$ | $\lambda_H$ | $h_H$ |
| a) MEASURING INSTRUMENT | 90% | 50% | 30% |
| b) OBSERVER | 10% | 50% | 70% |

# FIG.11A

# FIG.11B

# FIG.12

BASIC VERTICAL LOAD CENTER POINT S

FIG. 13A     FIG. 13B     FIG. 13C

# F I G . 14

GAIN DIAGRAM (WEIGHTING) OF FILTER

# F I G . 15A

CENTRIFUGAL FORCE

GRAVITATIONAL FORCE

VERTICAL LOAD CENTER POINT S

# F I G . 15B

COMPLETE BALANCE

$\theta_1{}^* = \phi_{eq}$

ACCELERATION SENSED BY OCCUPANT

VEHICLE BODY TILT ANGLE TARGET DECISION FUNCTION (EXAMPLE)

NOT TILTED

VEHICLE BODY TILT ANGLE TARGET VALUE

$\phi_0$  BALANCED TILT ANGLE $\phi_{eq}$

# FIG.16

| $\Delta \beta^*_{SL} \cdot \Delta \beta^*_{CL} > 0$<br><br>COOPERATIVE OPERATION | $\Delta \beta^*_{SL} \cdot \Delta \beta^*_{CL} < 0$<br><br>OFFSET OPERATION | |
| --- | --- | --- |
| | $\Delta \beta^*_{LOW} \cdot \Delta \beta^*_{CL} \geqq 0$<br><br>SEAT MOVEMENT OPPOSITE OPERATION | $\Delta \beta^*_{LOW} \cdot \Delta \beta^*_{CL} < 0$<br><br>VEHICLE BODY TILT OPPOSITE OPERATION |
| | | |

# F I G . 17A

EXAMPLE: MECHANISM WHICH TILTS TIRE
SIMULTANEOUSLY WITH VEHICLE BODY

# F I G . 17B

SLIDER TILT MECHANISM

# F I G . 17C

TILT ONLY RIDING PORTION

SLIDE WEIGHT

**FIG. 18A**

USE ROD ACTUATOR

**FIG. 18B**

PIVOT TILT WEIGHT

**FIG. 18C**

SLIDE SHEET

**FIG. 19A**

SLIDE MECHANISM USING LINK

**FIG. 19B**

SLIDE ENTIRE VEHICLE BODY

**FIG. 19C**

## INTERNATIONAL SEARCH REPORT

| International application No. |
|---|
| PCT/JP2007/064489 |

A.  CLASSIFICATION OF SUBJECT MATTER
*B62K17/00*(2006.01)i, *B62K3/00*(2006.01)i

According to International Patent Classification (IPC) or to both national classification and IPC

B.  FIELDS SEARCHED

Minimum documentation searched (classification system followed by classification symbols)
B62K17/00, B62K3/00

Documentation searched other than minimum documentation to the extent that such documents are included in the fields searched
| Jitsuyo Shinan Koho | 1922-1996 | Jitsuyo Shinan Toroku Koho | 1996-2007 |
| Kokai Jitsuyo Shinan Koho | 1971-2007 | Toroku Jitsuyo Shinan Koho | 1994-2007 |

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
|---|---|---|
| Y<br>A | JP 2006-1385 A  (Sony Corp.),<br>05 January, 2006 (05.01.06),<br>Full text; all drawings<br>(Family: none) | 1-4,7<br>5-6,8-9 |
| Y<br>A | JP 2006-136962 A  (Hitachi, Ltd.),<br>01 June, 2006 (01.06.06),<br>Full text; all drawings<br>& US 2006/0097683 A1 | 1-4,7<br>5-6,8-9 |
| Y | JP 2006-123854 A  (Matsushita Electric Industrial Co., Ltd.),<br>18 May, 2006 (18.05.06),<br>Par. Nos. [0028] to [0031], [0060], [0144], [0146]; Figs. 1 to 29, 38<br>(Family: none) | 4 |

| ☒  Further documents are listed in the continuation of Box C. | ☐  See patent family annex. |
|---|---|

| Date of the actual completion of the international search<br>28 September, 2007 (28.09.07) | Date of mailing of the international search report<br>09 October, 2007 (09.10.07) |
|---|---|
| Name and mailing address of the ISA/<br>Japanese Patent Office | Authorized officer |
| Facsimile No. | Telephone No. |

Form PCT/ISA/210 (second sheet) (April 2005)

## INTERNATIONAL SEARCH REPORT

International application No.

PCT/JP2007/064489

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2006-176088 A  (Equos Research Co., Ltd.), 06 July, 2006 (06.07.06), (Family: none) | 1-9 |
| A | JP 2004-276727 A  (Matsushita Electric Works, Ltd.), 07 October, 2004 (07.10.04), Figs. 13 to 14 (Family: none) | 7-9 |

Form PCT/ISA/210 (continuation of second sheet) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004276727 A
- JP 2004129435 A